(19) Europäisches Patentamt
European Patent Office
Office européen des brevets

(11) **EP 3 959 251 B1**

(12) **EUROPÄISCHE PATENTSCHRIFT**

(45) Veröffentlichungstag und Bekanntmachung des Hinweises auf die Patenterteilung:
**27.03.2024  Patentblatt 2024/13**

(21) Anmeldenummer: **20719190.9**

(22) Anmeldetag: **17.04.2020**

(51) Internationale Patentklassifikation (IPC):
*C08G 18/40* (2006.01)   *C08G 18/79* (2006.01)
*C08G 18/28* (2006.01)   *C08G 18/75* (2006.01)
*C08G 18/80* (2006.01)   *C08G 18/08* (2006.01)
*C08G 18/42* (2006.01)   *C08G 18/48* (2006.01)
*C08G 18/16* (2006.01)   *C09D 175/06* (2006.01)
*C09D 175/08* (2006.01)   *C09J 175/06* (2006.01)
*C09J 175/08* (2006.01)

(52) Gemeinsame Patentklassifikation (CPC):
(C-Sets verfügbar)
**C08G 18/16; C08G 18/0823; C08G 18/0866;**
**C08G 18/2865; C08G 18/409; C08G 18/42;**
**C08G 18/4825; C08G 18/758; C08G 18/797;**
**C08G 18/808; C09D 175/06; C09D 175/08;**
**C09J 175/06; C09J 175/08;** C08G 2115/06;

(Forts.)

(86) Internationale Anmeldenummer:
**PCT/EP2020/060803**

(87) Internationale Veröffentlichungsnummer:
**WO 2020/216680 (29.10.2020 Gazette 2020/44)**

(54) **LATENT-REAKTIVE KLEBSTOFFZUBEREITUNGEN**

LATENT REACTIVE ADHESIVE PREPARATIONS

PRÉPARATIONS ADHÉSIVES À RÉACTION LATENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2019  EP 19170799**

(43) Veröffentlichungstag der Anmeldung:
**02.03.2022  Patentblatt 2022/09**

(73) Patentinhaber: **Covestro Deutschland AG**
**51373 Leverkusen (DE)**

(72) Erfinder:
• **BUECHNER, Joerg**
**51467 Bergisch Gladbach (DE)**
• **LAAS, Hans-Josef**
**51519 Odenthal (DE)**
• **KRAUS, Harald**
**51371 Leverkusen (DE)**
• **MELCHIORS, Martin**
**42799 Leichlingen (DE)**

(74) Vertreter: **Levpat**
**c/o Covestro AG**
**Gebäude K12**
**51365 Leverkusen (DE)**

(56) Entgegenhaltungen:
**EP-A1- 1 247 825      EP-A1- 2 186 841**
**WO-A1-2018/136488    US-A1- 2016 115 349**
**US-B2- 9 957 394**

(52) Gemeinsame Patentklassifikation (CPC): (Forts.)
C08G 2170/80

C-Sets
**C09D 175/06, C08L 79/00;**
**C09D 175/08, C08L 79/00;**
**C09J 175/06, C08L 79/00;**
**C09J 175/08, C08L 79/00**

(52) Gemeinsame Patentklassifikation (CPC): (Forts.)
C08G 2170/80

C-Sets
**C09D 175/06, C08L 79/00;**
**C09D 175/08, C08L 79/00;**
**C09J 175/06, C08L 79/00;**
**C09J 175/08, C08L 79/00**

**Beschreibung**

Die vorliegende Erfindung betrifft latent-reaktive Klebstoffzubereitungen, die feste Polycarbodiimidharze, die eine Erweichungstemperatur von oberhalb von +30°C aufweisen, als Vernetzungsmittel für Klebstoffdispersionspolymere enthalten. Mischungen aus wenigstens einem festen Polycarbodiimidharz und wenigstens einer Polymerdispersion sind selbst bereits lagerstabil und eignen sich für die Herstellung von lagerstabilen latent-reaktiven Klebstoffdispersionen, latent-reaktiven Klebstoffschichten, selbsttragenden latent-reaktiven Klebstofffolien oder latent-reaktiven Klebstoffpulvern. Diese Mischungen können auch selbst als lagerstabile latent-reaktive Klebstoffe eingesetzt werden, ggf. unter Zusatz von in der Klebstofftechnologie für Klebstoffdispersionen üblichen Additiven wie Katalysatoren, Entschäumern, Benetzungsmitteln, Verdickern, (Mikro)bioziden, Farbstoffen, Pigmenten, Viskositätsstellem und dergleichen. Geeignete Polycarbodiimide müssen daher eine mittlere Mindestfunktionalität von 2 aufweisen, also im Durchschnitt mindestens 2 Carbodiimid-Gruppen pro Molekül aufweisen.

Polycarbodiimide sind bekannt. EP-A 2 552 982 (WO 2011/120928) offenbart ein Verfahren zur Herstellung von hydrophil modifizierten Polycarbodiimiden aus aliphatischen oder cycloaliphatischen Diisocyanaten, wobei das während der Carbodiimidisierung entstehende Reaktionsgas Kohlendioxid zeitweise (i.e. periodisch) oder permanent aus dem Reaktionsgemisch entfernt wird. Vorteil dieser Arbeitsweise ist die geringe Menge des zur Carbodiimidisierung benötigten Katalysators. Das Polycarbodiimidharz ist bei 23°C eine hochviskose Masse. Das so erhaltene hydrophil modifizierte Polycarbodiimidharz wird in Wasser dispergiert.

Verwendung finden solche Polycarbodiimid-Dispersionen u.a. als Vernetzungsmittel für wässrige Klebstoffe, Beschichtungsmittel oder Lacke. Ein Nachteil dieser Lehre ist jedoch, dass die Vernetzungsreaktion in der Klebstoff- bzw. Lackschicht unmittelbar mit dem Trockenen der wässrigen Beschichtung einsetzt und dann mit hoher Geschwindigkeit fortschreitet.

Die lagerstabile Vorbeschichtung von Substratoberflächen, selbsttragenden latent-reaktiven Klebstofffolien oder reaktiven Klebstoffpulvern ist mit dieser Art Vernetzungsmittel daher prinzipiell nicht möglich.

In der verarbeitenden Industrie besteht jedoch der dringende Wunsch, den Klebstoffauftrag und den Fügeprozess räumlich und zeitlich voreinander zu trennen. Werden z.B. (teil)kristalline Polyurethan-Dispersionspolymere für den Fügeprozess verwendet, dann ist es vorteilhaft, wenn die Vernetzungsreaktion des Klebstoffpolymers erst durch die ohnehin notwendige Erwärmung der Klebstoffschicht vor oder während des Fügeprozesses ausgelöst wird. Unter "Dispersionspolymeren" versteht der Fachmann auf diesem technischen Gebiet solche Polymere, die auf grundsätzlich bekannte Weise als dispergierte Phase in wässrigen Dispersionen eingesetzt werden können. Diese Dispersionspolymere werden auch als "dispergierbare Polymere" bezeichnet. Es handelt sich bei einem Dispersionspolymer daher um das Polymer in den Polymerpartikeln (disperse Phase) einer kolloidal stabilen Polymerdispersion. Bei der kontinuierlichen Phase handelt es sich bei Polyurethandispersionen in der Regel um Wasser. Eine Polymerdispersion besteht somit aus wenigstens einer dispersen Phase (Polymerpartikel) und einer kontinuierlichen Phase (dem Dispersionsmedium). Bei den erfindungsgemäß eingesetzten Polyurethandispersionen ist das Dispersionsmedium Wasser.

Wird die Polymerdispersion auf ein Substrat aufgetragen und das Dispersionsmedium abgedampft, dann entsteht - wenn die Temperatur des Polymers oberhalb der Mindestfilmbildungstemperatur (MFT) liegt - ein Polymerfilm aus dem Dispersionspolymer. Der Polymerfilm enthält alle bei der Trocknungstemperatur nicht-flüchtigen Bestandteile der Polymerdispersion.

Latent-reaktive Zubereitungen von Dispersionspolymeren, die Feststoff-Isocyanate als Vernetzungsmittel enthalten bzw. mit solchen Feststoffisocyanaten gemischt als disperse Phase einer Dispersion auf Substrate aufgebracht werden, sind bekannt.

EP-A 0 922 720 offenbart die Verwendung wenigstens einer, im Wesentlichen wässrigen Dispersion, die wenigstens ein festes oberflächendesaktiviertes Polyisocyanat und wenigstens ein mit Isocyanat reaktives Polymer enthält, zur Herstellung von getrockneten, lagerstabilen, latent-reaktiven Schichten oder Pulvern.

Prinzipiell können nach dieser Lehre alle Feststoff-Isocyanate verwendet werden. Es hat sich jedoch gezeigt, dass bei Einsatz von (teil)kristallinen Polyurethandispersionspolymeren zwei Feststoff-Isocyanate bevorzugt verwendet werden können: Das TDI-Dimer und das IPDI-Trimer. Beide Isocyanate sind in den geschmolzenen Polyurethan-Dispersionspolymeren gut löslich bzw. mit ihnen gut verträglich, was für die gleichmäßige und gute Vernetzung des Klebstoffpolymers vorteilhafterweise erforderlich ist.

Beide Feststoff-Isocyanate weisen jedoch in einigen Punkten Nachteile auf:
Sobald sich das TDI-Dimer im geschmolzenen Polyurethanpolymer auflöst, beginnt die Rückspaltung des TDI-Dimers in das TDI-Monomer (2,4-TDI). Das 2,4-TDI ist leicht flüchtig und kann aus der Klebstoffschicht beispielsweise durch poröse Substrate (Textil) in den Gasraum über der Klebeverbindung freigesetzt werden. 2,4-TDI ist ein Gefahrstoff, der nach GHS (Globally Harmonized System of Classification, Labelling and Packaging of Chemicals) wegen seiner akuten Toxizität mit GHS 06 und wegen diverser Gesundheitsgefahren mit GHS08 gekennzeichnet werden muss.

Nach Lehre der EP-A 1 600 485 kann die Freisetzung von 2,4-TDI durch die Mitverwendung von Katalysatoren deutlich verringert werden. Es hat sich jedoch gezeigt, dass die Freisetzung von 2,4-TDI nicht sicher auf Mengen unterhalb der Nachweisegrenze reduziert werden kann. Aus diesem Grund kommen latent-reaktive Klebstoffschichten, die das TDI-Dimer als Feststoff-Isocyanate enthalten, bei z.B. Klebprozessen für Anbaubauteile im Automobilinnenraum (Armaturentafel, Türseitenteil) nicht zur Anwendung.

Beim IPDI-Trimer ist nachteilig, dass seine wässrigen Formulierungen nur eine begrenzte Lagerstabilität besitzen. So beträgt die max. Lagerdauer wässriger Formulierungen mit dem IPDI-Trimer bei 23°C nur 1-2 Monate, bei 30°C ca. 2 Wochen und bei 35°C nur noch ca. 1 Woche. Darüber hinaus ist das IPDI-Trimer deutlich weniger reaktiv als das TDI-Dimer und wird daher fast ausschließlich unter Mitverwendung geeigneter Katalysatoren verarbeitet (s. EP-A 2 099 840 A1 bzw. WO 2008/071307).

Es besteht daher in der klebstoffverarbeitenden Industrie der Wunsch nach neuen Vernetzungsmitteln, die es erlauben, lagerstabile wässrige Klebstoffsysteme bereitzustellen, aus denen latent-reaktive Klebstoffschichten, Klebstofffilme bzw. Klebstoffpulver erzeugt werden können. Die Vernetzungsmittel sollen physiologisch unbedenklich sein, sich bei Verarbeitung des Klebstoffpolymers nicht zersetzen und eine ausreichend hohe Reaktivität besitzen.

Bei Raumtemperatur feste Polycarbodiimide sind bekannt. Verwendung finden diese Produkte als Stabilisator / Hydrolyseschutzmittel für Estergruppen enthaltende Polymere wie z.B. Polyester oder thermoplastische Polyurethane. Daneben kommen Feststoff-Polycarbodiimide auch als Vernetzer-komponente in Pulverlackformulierungen zur Anwendung.

Carbodiimid-blockierte Isocyanat-Prepolymere sind ebenfalls beschrieben. Auch diese Produkte können Feststoffe mit einer Erweichungstemperatur oberhalb von +23°C sein.

EP-A 0 881 243 offenbart die Verwendung von Polycarbodiimid aus aliphatischen, araliphatischen und aromatischen Diisocyanaten als Vernetzungsmittel für Pulverlacke. Die Polycarbodiimide besitzen eine Schmelztemperatur zwischen 40°C und 200°C. Der Polymerisationsgrad der erfindungsgemäßen Polycarbodiimide liegt bei einem Polycarbodiimid mit terminalen NCO-Gruppen zwischen 2 und 50, bei Mitverwendung von Monoisocyanaten zum Kettenabbruch zwischen 0 und 50 und bei Kettenabbruch durch Alkohol, Amin, Carbonsäure oder Carbonsäureanhydrid zwischen 2 und 50.

US 8 399 574 beschreibt die Zusammensetzung einer Pulvermischung für einen Slush-Molding-Prozess bestehend aus einem thermoplastischen Polyurethan und einem Polycarbodiimid mit einem Molekulargewicht zwischen 10000 und 30000g/mol. Das Polycarbodiimid wird aus Tetramethylxylylendiisocyanat (TMXDI) erzeugt.

EP-A 0 767 188 beschreibt Vernetzungsmittel für Polyurethan-Basislacke. Die Vernetzungsmittel sind mit Carbodiimidgruppen blockierte Isocyanat-Prepolymere. Die Vernetzungsmittel besitzen eine Schmelztemperatur von ≥ 70°C.

EP-A 0 005 230 offenbart Bindemittel für Pulverlacke, wobei die Vernetzer-Komponente b), ein blockiertes Isocyanat, einen Schmelzpunkt zwischen 60°C und 180°C aufweist. Als Blockierungsmittel wird ebenfalls Carbodiimid verwendet. Die Blockierungsreaktion erfolgt durch Reaktion der intermediär gebildeten Carbodiimidsegmente mit freien NCO-Gruppen unter Bildung von Uretonimin. Beim Erhitzen des Pulverlacks spaltet das Uretonimin in Carbodiimid und Isocyanat zurück, wobei das freigesetzte Isocyanat das Pulverlackpolymer vernetzt.

Dies bedeutet, dass nach der Lehre EP-A 0 76 188 und EP-A 0 005 230 die Vernetzung des Pulverlacks nicht durch Reaktion der Carbodiimidsegmente mit den reaktiven Gruppen in den Pulverlack-Molekülen, sondern durch die bei höheren Temperaturen freigesetzten (zurückgespaltenen) NCO-Gruppen erfolgt.

US 9 957 394 (WO 2018/048709) beschreibt eine Pulverlackzusammensetzung bestehend aus einem Carboxylgruppen enthaltendem Polymer mit einer Glasübergangstemperatur von mindestens +50°C und einem Polycarbodiimid, welches Urethan- und oder Harnstoffsegmente enthält. Das Polycarbodiimid besitzt ebenfalls eine Glasübergangstemperatur von wenigstens +50°C. Wird die Pulverlackzusammensetzung auf ein Substrat oder eine Trennfolie aufgetragen, dann kommt es nicht zur Filmbildung. Die wässrige Mischung aus Polymer und Polycarbodiimid wird getrocknet und das erhaltende Pulver durch Vermahlen auf die gewünschte Partikelgröße eingestellt. Für die Herstellung des Polycarbodiimids geeignet sind 4,4'-Diisocyanatodicyclohexylmethan, Isophorondiisocyanat, meta-Tetramethylxylylendiisocyanat (TMXDI) oder Mischungen dieser Diisocyanate.

Chemisch härtende Pulverlacke bestehen aus wenigstens einem Filmbildner-System (Bindemittel) und einem Vernetzer. Während der Verarbeitung des vorgemischten Pulverlacks in dem Extruder darf keine merkliche Vernetzung eintreten. Der gemahlene Pulverlack darf außerdem während der Lagerung nicht sintern oder verblocken. Aus diesem Grund kommen für Pulverlacke nur weitgehend amorphe Bindemittel / Filmbildner mit einer Glasübergangstemperatur von mindestens +40°C zur Anwendung (Industrielle Pulverbeschichtung, Judith Pietschmann, ISBN 979-3-8348-0463-1).

US 2016/115349 A1 offenbart eine wässrige Zusammensetzung.

WO 2018/136488 A1 offenbart Wasser-basierte Polyurethanbeschichtungen.

EP 1 247 825 A1 offenbart latente, quervernetzbare, wässrige, Polyurethan umfassende Dispersionen.

EP 2 186 841 A1 offenbart vernetzbare Polyurethandispersionen.

Der vorliegenden Erfindung lag die Aufgabe zugrunde, ein neues Vernetzungsmittel für Klebstoffpolymere bereitzustellen, das in wässrigen Polymerdispersionen eingesetzt werden kann und diesen Zubereitungen eine lange Topfzeit verleiht und die Herstellung von latent-reaktiven Klebstoffschichten, latent-reaktiven Klebstofffilmen und latent-reaktiven Klebstoffpulvern erlaubt. Das Vernetzungsmittel soll physiologisch unbedenklich sein. Die Vernetzungsreaktion soll durch Wärmeeinwirkung auf das Klebstoffpolymer ausgelöst werden

Diese Aufgabe wurde durch den Gegenstand der vorliegenden Erfindung gelöst.

Die vorliegende Erfindung besteht unter anderem in der Bereitstellung der Lehre, Zubereitungen enthaltend feinpartikuläre polymere Carbodiimide, die eine Erweichungstemperatur von wenigstens + 30°C, vorzugsweise wenigstens + 35°C aufweisen, in Abmischung mit feinpartikulären Polymeren, die mit diesen Polycarbodiimiden vernetzt werden können, sei es (trocken) als Pulvermischung oder (nass) als Dispersion vorliegend oder durch Mischen und Aufschmelzen des Pulvers als dann unmittelbar abreagierende (im Sinne einer Vernetzung des Polymers) Mischung oder durch Auftrocknung der Dispersion als latent reaktiven Film auf dem Substrat erhaltenen Beschichtung, bereit zu stellen.

Gegenstand der vorliegenden Erfindung sind daher auch latent-reaktive Zubereitungen auf Basis von Dispersionspolymeren, die eine Mindestfilmbildungstemperatur von ≤ +23°C aufweisen und eine Glasübergangstemperatur gemessen mit der DSC (Heizrate 20K/min) von ≤ 0°C, die mit Carbodiimiden vernetzt werden können, und wenigstens ein Polycarbodiimid mit einer Glasübergangstemperatur von wenigstens +30°C und einer mittleren Funktionalität von mindestens 2 enthalten, wobei das Polycarbdiimid aliphatisch oder cycloaliphatisch gebundene Carbodiimid-Gruppen aufweist und eine Partikelgröße dv(50) ≤ 70μm aufweist, wobei das Dispersionspolymer ein Polyurethan- oder Polyurethan-Polyharnstoff-Polymer ist, wobei das mol-Verhältnis der nukleophilen Gruppen zu den Carbodiimidsegmenten (-N=C=N-) im Feststoffpolycarbodiimid 1:5 bis 1:1 beträgt, wobei die Mindestfilmbildungstemperatur nach DIN ISO 2115 bestimmt wird und die Partikelgröße nach ISO 13320 durch Laserbeugung mit einem Malvern Mastersizer 3000 als Messgerät bestimmt wird.

In den erfindungsgemäßen Zubereitungen werden als Vernetzungsmittel für Carbodiimid-reaktive Dispersionspolymere vorzugsweise beliebige feste Polycarbodiimid-Pulver eingesetzt, die eine Erweichungstemperatur von wenigstens + 30°C, vorzugsweise wenigstens + 35°C aufweisen.

Derartige Polycarbodiimid-Pulver lassen sich nach an sich bekannten Verfahren durch Vermahlen fester Polycarbodiimidharze, beispielsweise mit Hilfe von Kugel-, Perl-, Sandmühlen oder Strahlmühlen, gegebenenfalls bei erniedrigter Temperatur (Kryogenvermahlung), herstellen. Die Partikelgröße bzw. die Partikelgrößenverteilung der Polycarbodiimid-Pulver kann anschließend durch Sieben oder Sichten weiter eingegrenzt werden. Die Größe der erhaltenen Partikel kann beispielsweise nach der Methode gemäß ISO 13320 (Laserbeugung) bestimmt werden. Es werden jeweils fünf Einzelmessungen durchgeführt und das arithmetische Mittel aus den Einzelmessungen angegeben. Als Messgerät kann beispielsweise ein Malvern Mastersizer 3000 eingesetzt werden.

Geeignet sind Polycarbodiimid-Pulver mit einer mittleren Partikelgröße dv(50) ≤ 70μm, bevorzugt dv(50) ≤ 20μm und besonders bevorzugt Partikel mit dv(50) ≤ 3,4μm. Die Bestimmung der Partikelgröße erfolgt nach der ISO 13320 (Laserbeugung) mit einem Malvern Mastersizer 3000 als Messgerät. Es werden jeweils fünf Einzelmessungen durchgeführt und das arithmetische Mittel aus den Einzelmessungen angegeben.

Die Polycarbodiimidharze, die zur Herstellung der erfindungsgemäßen Zubereitungen verwendet werden, sind beliebige, mindestens zwei Carbodiimidgruppen pro Molekül enthaltende Verbindungen, wie sie beispielsweise durch Umsetzung organischer Polyisocyanate, gegebenenfalls mit hydroxy- und/oder aminofunktionellen Verbindungen, in Gegenwart eines Carbodiimidisierungs-Katalysators unter Abspaltung von Kohlenstoffdioxid erhältlich sind.

Geeignete Isocyanate zur Herstellung der Polycarbodiimidharze sind beliebige, auf verschiedene Weise, beispielsweise durch Phosgenierung in der Flüssig- oder Gasphase oder auf phosgenfreiem Weg, wie z. B. durch thermische Urethanspaltung, zugängliche Mono-, Di- und Triisocyanate mit aliphatisch, cycloaliphatisch, araliphatisch und/oder aromatisch gebundenen Isocyanatgruppen.

Bevorzugte Monoisocyanate sind solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat.

Bevorzugte Diisocyanate sind solche des Molekulargewichtsbereichs 140 bis 400, wie z.B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H12-MDI), 4,4'-Diisocyanato-3,3'-dimethyldicyclohexylmethan, 4,4' Diisocyanato-3,3',5,5'-tetramethyldicyclo-hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)iso-cyanato-methylcyclohexan, Bis-(isocyanatomethyl)-norbornan, 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-1,4-diisocyanatobenzol, die isomeren Diethylphenylendiisocyanate, Diisopropylphenylendiisocyanate, Diisododecylpehnylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder 4-Methyl-diphenylmethan-3,5,2',4',6'-pentaisocyanat.

Weitere ebenfalls geeignete Diisocyanate finden sich darüber hinaus beispielsweise in Justus Liebigs Annalen der Chemie Band 562 (1949) S. 75 - 136.

Als besonders geeignetes Triisocyanat sei beispielhaft 4-Isocyanatomethyl-1,8-octandiisocyanat (Triisocyanatononan; TIN) genannt.

Zur Herstellung der Polycarbodiimidharze können auch Mischungen aus mindestens zwei solcher Mono-, Di- und/oder Triisocyanate zum Einsatz kommen.

Bevorzugt kommen zur Herstellung der Polycarbodiimidharze monomere Diisocyanate zum Einsatz.

Besonders bevorzugt ist die Verwendung von PDI, HDI, IPDI, H12-MDI, TMXDI, TDI und/oder MDI.

Gegebenenfalls kommen bei der Herstellung der Polycarbodiimidharze hydroxy- und/oder aminofunktionelle Verbindungen als weitere Aufbaukomponenten zum Einsatz.

Geeignete hydroxyfunktionelle Aufbaukomponenten sind beispielsweise beliebige einfache aliphatische bzw. cycloaliphatische Monoalkohole, wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole und Hydroxymethylcyclohexan, Etheralkohole, wie 2-Methoxyethanol, 2-Ethoxyethanol, 2-Propoxyethanol, 2-Butoxyethanol, Diethylenglykolmonomethylether, Diethylenglykolmonoethylether, Diethylenglykolmonobutylether, 3-Methoxy-1-butanol und Glycerin-1,3-diethylether, Esteralkohole, wie Hydroxyethylacetat, Butylglycolat, Ethyllactat, Glycerindiacetat oder solche, wie sie sich durch Umsetzung der genannten Monoalkohole mit Lactonen erhalten lassen oder Etheralkohole, wie sie sich durch Umsetzung der genannten Monoalkohole mit Alkylenoxiden, insbesondere Ethylenoxid und/oder Propylenoxid, erhalten lassen.

Ebenfalls geeignete Alkohole zur Herstellung der Polycarbodiimidharze sind beliebige mindestens difunktionelle Polyole, insbesondere einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2-und 1,4-Cyclohexandiol, 1,4-Cyclohexandimethanol, 1,4-Bis(2-hydroxyethoxy)-benzol, 30 2,2-Bis-(4-hydroxyphenyl)-propan (Bisphenol A), 2,2-Bis-(4-hydroxycyclohexyl)-propan (Perhydro-bisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.02,6]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z.B. Diethylenglykol, Triethylenglykol, Tetraethylenglykol, Dipropylenglykol oder Dibutylenglykol oder niedermolekulare Esteralkohole, wie z. B. Hydroxypivalinsäureneopen-tylglykolester.

Geeignete Alkohole zur Herstellung der Polycarbodiimidharze sind auch die üblichen aus der Polyurethanchemie bekannten polymeren Polyetherpolyole, Polyesterpolyole, Polycarbonatpolyole und/oder Polyacrylatpolyole, die üblicherweise ein zahlenmittleres Molekulargewicht von 200 bis 22000, vorzugsweise von 250 bis 18000, besonders bevorzugt von 250 bis 12000 aufweisen. Ein breiter Überblick über derartige polymere Polyole zur Herstellung der Polycarbodiimidharze findet sich beispielsweise in N. Adam et al.: "Polyurethanes", Ullmann's Encyclopedia of 10 Industrial Chemistry, Electronic Release, 7th ed., chap. 3.2 - 3.4, Wiley-VCH, Weinheim 2005.

Geeignete aminofunktionelle Aufbaukomponenten zur Herstellung der Polycarbodiimidharze sind beispielsweise einfache aliphatische bzw. cycloaliphatische Monoamine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin. Geeignete Amine sind auch beliebige aliphatische und cycloaliphatische Amine mit mindestens zwei primär und/oder sekundär gebundenen Aminogruppen, wie z. B. 1,2-Diaminoethan, 1,2-Diaminopropan, 1,3-Diaminopropan, 1,4-Diaminobutan, 1,2-Diamino-2-methylpropan, 1,5-Diaminopentan, 1,3-Diamino-2,2-dimethylpropan, 1,6-Diaminohexan, 1,5-Diamino-2-methylpentan, 1,6-Diamino-2,2,4-trimethylhexan, 1,6-Diamino-2,4,4-trimethylhexan, 1,7-Diaminoheptan, 1,8-Diaminooctan, 2,5-Diamino-2,5-dimethylhexan, 1,9-Diaminononan, 2-Methyl-1,8-diaminooctan, 1,10-Diaminodecan, 1,11-Diaminoundecan, 1,12-Diaminododecan, 1,2-Diaminocyclopentan, 1,2-Diaminocyclohexan, 1-Amino-3,3,5-trimethyl-5-aminomethylcyclohexan (Isophorondiamin, IPDA), 3(4)-Aminomethyl-1-methylcyclohexylamin, 1,3-Diamino-2- und/oder -4-methylcyclohexan, Isopropyl-2,4-und/oder 2,6-diaminocyclohexan, 1,3-Bis(aminomethyl)-cyclohexan, 1,8-p-Diaminomenthan, Bis(4-aminocyclohexyl)-methan, Bis(4-amino-3-methylcyclohexyl)-methan, Bis(4-amino-3,5-dimethylcyclohexyl)-methan, Bis(4-amino-2,3,5-trimethylcyclohexyl)-methan, 1,1-Bis(4-aminocyclohexyl)-propan, 2,2-Bis(4-aminocyclohexyl)-propan, 1,1-Bis(4-ami-nocyclohexyl)-ethan, 1,1-Bis(4-aminocyclohexyl)-butan, 2,2-Bis(4-aminocyclohexyl)-butan, 1,1-Bis(4-amino-3-methylcyclohexyl)-ethan, 2,2-Bis(4-amino-3-methylcyclohexyl)-propan, 1,1-Bis(4-amino-3,5-dimethylcyclohexyl)-ethan, 2,2-Bis(4-amino-3,5-dimethylcyclohexyl)-propan, 2,2-Bis(4-amino-3,5-dimethylcyclohexyl)-butan, 2,4-Diaminodicyclohexylmethan, 4-Aminocyclohexyl-4-amino-3-methylcyclohexyl-methan, 4-Amino-3,5-dimethylcyclohexyl-4-amino-3-methylcyclohexyl-methan und 2-(4-Amino-cyclohexyl)-2-(4-amino-3-methylcyclohexyl)-methan, m-Xylylendiamin, Methyliminobispropylamin, Iminobispropylamin, Bis(6-aminohexyl)-amin, N,N-Bis(3-aminopropyl)-ethylendiamin, 4-Aminomethyl-1,8-octandiamin, Bis(aminopropyl)piperazin, Aminoethylpiperazin, Diethylentriamin, Dipropylentriamin, Triethylentetramin, Tetraethylenpentamin, Pentaethylenhex-amin, Heptaethylenoctamin.

Geeignete Amine sind daneben auch aminofunktionelle Polyalkylenglykole, wie z. B. 1,2-Bis(ami-noethoxy)-ethan, 1,11-Diamino-3,6,9-trioxaundecan, 1,13-Diamino-4,7,10-trioxatride-can und insbesondere die unter dem Handelsnamen Jeffamine® von Firma Huntsman Corp. kommerziell vertriebenen aminfunktionalisierten Polyalkylenglykole mit mittleren Molekulargewichten bis zu 5000, bevorzugt bis zu 2000, besonders bevorzugt bis zu 1000.

Gegebenenfalls können auch sterisch gehinderte aliphatische Diamine mit zwei sekundär gebundenen Aminogruppen zur Herstellung der Polycarbodiimidharze eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Zur Herstellung der Polycarbodiimidharze sind schließlich auch Aminoalkohole, wie z. B. 2-Aminoethanol, die isomeren Aminopropanole und -butanole, 3-Amino-1,2-propandiol und 1,3-Diamino-2-propanol, als Aufbaukomponenten geeignet.

Die Herstellung der Polycarbodiimidharze durch Umsetzung organischer Isocyanate, gegebenenfalls mit hydroxy- und(oder aminofunktionellen Verbindungen erfolgt nach an sich bekannten Methoden in Gegenwart eines geeigneten Carbodiimidisierungs-Katalysators unter Abspaltung von Kohlenstoffdioxid.

Geeignete Katalysatoren für die Carbodiimidbildung sind in einer Reihe von Übersichtsartikeln beschrieben, beispielsweise in Houben-Weyl, Methoden der organischen Chemie, Band E4, Kohlensäurederivate, Georg-Thieme-Verlag, Stuttgart, 1983, S. 897 bis 900 und 910, in Chemical Reviews, Volume 67, Number 2, 1967, S. 107-113, in Angew. Chem., 1962, 74, 801-806 und in Angew. Chem. 1981, 93, 855-866 beschrieben. Weitere geeignete Katalysatoren finden sich darüberhinaus auch in der Patentliteratur, beispielsweise in DE 1130594, DE 3512918, US 2840589, US 2853473, US 2853518 oder US 2941966.

Besonders geeignete Katalysatoren sind insbesondere heterocyclische, Phosphor enthaltende Verbindungen, wie Phospholine, Phospholene und Phospholidine sowie deren Oxide und Sulfide. Beispielhaft für solche Katalysatoren seien hier genannt 1-Methyl-2-phospholen-1-oxid, 1-Methyl-3-phos-pholen-1-oxid, 3-Methyl-1-phenyl-3-phospholen-1-oxid und 3-Methyl-1-phenyl-2-phospholen-1-oxid sowie die analogen Phospholan-Typen.

Die Synthese der Carbodiimide erfolgt in der Regel in an sich bekannter Weise, beispielsweise nach einem im vorstehend genannten Stand der Technik beschriebenen Verfahren, ausgehend von Isocyanaten durch Katalyse unter Abspaltung von Kohlenstoffdioxid. Dabei werden bei geeigneter Auswahl mono- und/oder polyfunktioneller Isocyanate feste Mono- oder Polycarbodiimiden mit Erweichungstemperaturen im oben angegebenen Bereich erhalten, die vorzugsweise frei von Isocyanatgruppen sind und bei Mitverwendung von hydroxy- und/oder aminofunktionellen Aufbaukomponenten Urethan- und/oder Harnstoffgruppen aufweisen. Geeignete wässrige Polymerdispersionen sind solche mit nukleophilen funktionellen Gruppen. Solche funktionellen Gruppen sind Carboxyl-, Amino-, Mercapto- und Hydroxylgruppen, ganz besonders bevorzugt sind Carboxylgruppen, schon weil sie in der Regel ohne den Einsatz von Katalysatoren mit den Carbodiimiden reagieren. Die Mindestfilmbildungstemperatur der Dispersionspolymere liegt bei ≤ +23°C. Sie besitzen eine Glasübergangstemperatur gemessen mit der DSC (Heizrate 20K/min) von ≤ 0°C.

Geeignete Polymerdispersionen sind beispielsweise solche auf Basis von Polymerisaten olefinisch ungesättigter Monomere, wie sie z.B. in der EP-A 0 206 059 beschrieben sind. Hierbei handelt es sich beispielsweise um Homo- und Co-Polymerisate auf Basis von Vinylestern von Carbonsäuren mit 2 bis 18 C-Atomen, bevorzugt mit 2 bis 4 C-Atomen, wie z.B. Vinylacetat. Diese können gegebenenfalls mit bis zu 70 Gew.-%, bezogen auf die Gesamtmenge, an anderen olefinisch ungesättigten Monomeren und/oder Homo- oder Copolymerisaten von (Meth)Acrylsäureestern von Alkoholen mit 1 bis 18 C-Atomen, bevorzugt mit 1 bis 4 C-Atomen, wie beispielsweise (Meth)Acrylsäuremethyl-, -ethyl-, -propyl-, -hydroxyethyl- oder -hydroxypropyl-estern, eingesetzt werden.

Bevorzugte Polymerdispersionen sind Dispersionen von Polyurethan-Polyhamstoff-Polymeren, die laterale und / oder terminale Carboxylgruppen in der Polymerkette tragen. Polyurethan-Polyhamstoff-Dispersionen sind im industriellen Maßstab verfügbar und werden im Allgemeinen als Polyurethandispersionen (PUDs) bezeichnet.

Die Polymere enthalten als Aufbaukomponenten:

(A) wenigstens eine Diol- und/oder Polyolkomponente

(B) wenigstens eine Di- und/oder Polyisocyanatkomponente

(C) wenigstens eine mindestens eine hydrophilierende Gruppe aufweisende Komponente

(D) gegebenenfalls mono-, di-, und/oder tri-aminofunktionelle und/oder hydroxyaminofunktionelle Verbindungen und

(E) gegebenenfalls sonstige isocyanatreaktive Verbindungen.

Geeignete Diol- und/oder Polyolkomponenten A) sind Verbindungen mit mindestens zwei gegenüber Isocyanaten reaktionsfähigen Wasserstoffatomen und einem mittleren Molekulargewicht bevorzugt von 62 bis 18000, besonders bevorzugt 62 bis 4000 g/mol. Beispiele für geeignete Aufbaukomponenten sind Polyether, Polyester, Polycarbonate, Polylactone und Polyamide. Bevorzugte Polyole A) weisen bevorzugt 2 bis 4, besonders bevorzugt 2 bis 3 Hydroxylgruppen, ganz besonders bevorzugt 2 Hydroxylgruppen auf. Auch Gemische verschiedener derartiger Verbindungen kommen in Frage.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- oder Polycarbonsäuren, wie z.B. Bernstein-, Methylbernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal-, Cyclohexandicarbon-, Malein-, Fumar-, Malon- oder Trimellitsäure sowie Säureanhydride, wie o-Phthal-, Trimellit- oder Bernsteinsäureanhydrid oder deren Gemische mit mehrwertigen Alkoholen, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische, gegebenenfalls unter Mitverwendung höherfunktioneller Polyole, wie Trimethylolpropan, Glycerin oder Pentaerythrit, hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Bei den Polyesterpolyolen kann es sich auch um Homo- oder Mischpolymerisate von Lactonen handeln, die bevorzugt durch Anlagerung von Lactonen oder Lactongemischen, wie Butyrolacton, $\varepsilon$-Caprolacton und/oder Methyl-$\varepsilon$-caprolacton an die geeignete di- und/oder höherfunktionelle Startermoleküle, wie z.B. die vorstehend als Aufbaukomponenten für Polyesterpolyole genannten niedermolekularen, mehrwertigen Alkohole erhalten werden. Die entsprechenden Polymerisate des $\varepsilon$-Caprolactons sind bevorzugt.

Auch Hydroxylgruppen aufweisende Polycarbonate kommen als Polyhydroxylkomponente A) in Betracht, z.B. solche, die durch Umsetzung von Diolen wie 1,4-Butandiol und/oder 1,6-Hexandiol mit Diarylcarbonaten, wie z.B. Diphenylcarbonat, Dialkylcarbonaten, wie z. B. Dimethylcarbonat oder Phosgen hergestellt werden können. Durch die zumindest teilweise Verwendung von Hydroxylgruppen aufweisenden Polycarbonaten kann die Hydrolysebeständigkeit der Polyurethan- bzw. Polyurethan-Hamstoff-Dispersionsklebstoffe verbessert werden.

Als Polyetherpolyole geeignet sind z.B. die Polyadditionsprodukte der Styroloxide, des Ethylenoxids, Propylenoxids, Tetrahydrofurans, Butylenoxids, Epichlorhydrins, sowie ihre Mischadditionsund Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole. Als Aufbaukomponenten A) geeignete Polyetherpolyole sind die Homo-, Misch- und Pfropfpolymerisate des Propylenoxids und des Ethylenoxids, welche durch Anlagerung der genannten Epoxide an niedermolekulare Di- oder Triole, wie sie oben als Aufbaukomponenten für Polyesterpolyole genannte werden oder an höherfunktionelle niedermolekulare Polyole wie z.B. Pentaerythrit oder Zucker oder an Wasser zugänglich sind.

Ebenfalls geeignete Komponenten A) sind niedermolekulare Diole, Triole und/oder Tetraole wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Neopentylglykol, 1,4-Cyclohexandiol, 1,4-Cyclohexan-dimethanol, 1,4-, 1,3-, 1,2-Dihydroxybenzol oder 2,2-Bis-(4-hydroxyphenyl)-propan (Bisphenol A), TCD-Diol, Trimethylolpropan, Glycerin, Pentaerythrit, Dipenthaerytrit oder deren Gemische, gegebenenfalls unter Mitverwendung weiterer nicht genannter Diole bzw. Triole.

Als Polyole können auch Umsetzungsprodukte der genannten Polyole, insbesondere der niedermolekularen Polyole, mit Ethylen- und/oder Propylenoxid eingesetzt werden.

Die niedermolekularen Komponenten A) haben ein Molekulargewicht bevorzugt von 62 bis 400 g/ mol und werden bevorzugt in Kombination mit den oben beschriebenen Polyesterpolyolen, Polylactonen, Polyethern und/oder Polycarbonaten eingesetzt.

Die Polyolkomponente A) ist in dem erfindungsgemäßen Polyurethan bevorzugt zu 20 bis 95, besonders bevorzugt zu 30 bis 90 und ganz besonders bevorzugt zu 65 bis 90 Gew.-% enthalten.

Als Komponenten B) sind beliebige organische Verbindungen geeignet, die mindestens zwei freie Isocyanatgruppen pro Molekül aufweisen. Bevorzugt werden Diisocyanate $Y(NCO)_2$ eingesetzt, wobei Y für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoff-Atomen, einen zweiwertigen aromatischen Kohlenwasserstoffrest mit 6 bis 15 Kohlenstoff-Atomen oder einen zweiwertigen araliphatischen Kohlenwasserstoffrest mit 7 bis 15 Kohlenstoffatomen steht. Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethyl-cyclohexan (Isophorondiisocyanat; IPDI), 4,4'-Diisocyanato-dicyclohexyl-methan, 4,4'-Diisocyanato-dicyclohexylpropan-(2,2), 1,4-Di-isocyanatobenzol, 2,4-Diisocyanatotoluol, 2,6-Diisocyanatotoluol, 4,4'-Diisocyanato-diphenylmethan, 2,2'- und 2,4'-Diisocyanatodiphenylmethan, Tetramethylxylylendiisocyanat, p-Xylylendiisocyanat, p-Isopropylidendiisocyanat sowie aus diesen Verbindungen bestehende Gemische.

Neben diesen einfachen Diisocyanaten sind auch solche Polyisocyanate geeignet, die Heteroatome in dem die Isocyanatgruppen verknüpfenden Rest enthalten und/oder eine Funktionalität von mehr als 2 Isocyanatgruppen pro Molekül besitzen. Erstere sind z.B. durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Carbodiimid-, Imino-oxadiazindion- und/oder Oxadiazintrionstruktur. Als Beispiel für ein nicht-modifiziertes Polyisocyanat mit mehr als 2 Isocyanatgruppen pro Molekül sei z.B. 4-Isocyanatomethyl-1,8-octandiisocyanat (Nonantriisocyanat) genannt.

Bevorzugte Diisocyanate B) sind Hexamethylendiisocyanat (HDI), Dodecamethylendiisocyanat, 1,4-Diisocyanato-cyclohexan, 1-Isocyanato-3,3,5-trimethyl-5-isocyanatomethyl-cyclohexan (IPDI), 4,4'-Diisocyanato-dicyclohexyl-methan, 2,4-Diisocyanatotoluol, 2,6-Diisocyanatotoluol, 4,4'-Diisocyanato-diphenyl¬methan, 2,2'- und 2,4'-Diisocyanatodiphenylmethan, sowie aus diesen Verbindungen bestehende Gemische.

Besonders bevorzugte Komponenten B) sind 2,4-Diisocyanatotoluol, 2,6-Diisocyanatotoluol Hexamethylendiisocyanat und 1-Isocyanato-3,3,5-trimethyl-5-isocyanatomethylcyclohexan, sowie aus diesen Verbindungen bestehende Gemische.

Komponente B) ist in dem erfindungsgemäßen Polyurethan in Mengen von 5 bis 60, bevorzugt von 6 bis 45 und besonders bevorzugt in Mengen von 7 bis 25 Gew.-% enthalten.

Geeignete Komponenten C) sind beispielsweise Sulphonat- oder Carboxylatgruppen enthaltende Komponenten wie z.B. Diaminoverbindungen bzw. Dihydroxyverbindungen, die zusätzlich Sulfonat- und/oder Carboxylatgruppen tragen, wie beispielsweise die Natrium-, Lithium-, Kalium-, tert.-Amin-Salze der N-(2-Aminoethyl)-2-aminoethansulfonsäure, der N-(3-Aminopropyl)-2-aminoethansulfonsäure, der N-(3-Aminoproyl)-3-aminopropansulfonsäure, der N-(2-Aminoethyl)-3-ami-nopropansulphonsäure, der analogen Carbonsäuren, der Dimethylolpropionsäure, der Dimethylolbuttersäure, der Umsetzungsprodukte im Sinne einer Michaeladdition von 1 mol Diamin wie z.B. 1,2-Ethandiamin oder Isophorondiamin mit 2 mol Acrylsäure oder Maleinsäure.

Die Säuren werden häufig direkt in Ihrer Salzform als Sulphonat bzw. Carboxylat eingesetzt. Es ist jedoch auch möglich, die zur Salzbildung notwendigen Neutralisationsmittel anteilig oder ganz erst während oder nach der Herstellung der Polyurethane zuzugeben.

Für die Salzbildung besonders gut geeignete und bevorzugte tert. Amine sind z.B. Triethylamin, Dimethylcyclohexylamin, Ethyldiisopropylamin. Es können auch andere Amine zur Salzbildung eingesetzt werden, wie z.B. Ammoniak, Diethanolamin, Triethanolamin, Dimethylethanolamin, Methydiethanolamin, Aminomethylpropanol und auch Mischungen der genannten und auch anderer Amine. Sinnvollerweise werden diese Amine erst nach Bildung des Prepolymers zugegeben.

Es ist auch möglich andere Neutralisationsmittel wie z.B. Natrium-, Kalium-, Lithium, CalciumHydroxid für Neutralisationszwecke einzusetzen.

Weitere geeignete Komponenten C) sind nichtionisch hydrophilierend wirkende, mono- oder difunktionelle Polyether auf Basis von auf Alkoholen oder Aminen gestartete Ethylenoxid-Polymeren oder Ethylenoxid/Propylenoxid-Copolymeren, wie z.B. Polyether LB 25 (Covestro Deutschland AG, Leverkusen, Deutschland)oder MPEG 750: Methoxypolyethylenglykol, Molekulargewicht 750 g/mol (z.B. Pluriol® 750, BASF AG, Deutschland).

Bevorzugte Komponenten C) sind N-(2-Aminoethyl)-2-aminoethansulfonat, N-(2-Aminoethyl)-2-aminoethancarboxylat und die Salze der Dimethylolpropionsäure und der Dimethylolbuttersäure.

Komponente C) ist in dem erfindungsgemäßen Polyurethan bevorzugt zu 0,1 bis 15 Gew.-%, besonders bevorzugt von 0,5 bis 10 Gew.-%, ganz besonders bevorzugt von 0,8 bis 5 Gew.-% und noch weiter bevorzugt von 0,9 bis 3,0 Gew.-% enthalten.

Geeignete Komponenten D) sind mono-, di-, trifunktionelle Amine und/oder mono-, di-, trifunktionelle Hydroxyamine, wie z.B. aliphatische und/oder alicyclische primäre und/oder sekundäre Monoamine wie Ethylamin, Diethylamin, die isomeren Propyl- und Butylamine, höhere linearaliphatische Monoamine und cycloaliphatische Monoamine wie Cyclohexylamin. Weitere Beispiele sind Aminoalkohole, d. h. Verbindungen, die in einem Molekül Amino- und Hydroxylgruppen enthalten, wie z. B. Ethanolamin, N-Methylethanolamin, Diethanolamin, Diisopropanolamin, 1,3-Diamino-2-propanol, N-(2-Hydroxyethyl)-ethylendiamin, N,N-Bis(2-Hydroxyethyl)-ethylendiamin und 2-Propanolamin. Weitere Beispiele sind Diamine und Triamine wie z.B. 1,2-Ethandiamin, 1,6-Hexamethylendiamin, 1-Amino-3,3,5-trimethyl-5-aminomethyl-cyclohexan (Isophorondiamin), Piperazin, 1,4-Diaminocyclohexan, Bis-(4-aminocyclohexyl)-methan und Diethylentriamin. Weiterhin kommen Adipinsäuredihydrazid, Hydrazin bzw. Hydrazinhydrat in Frage. Selbstverständlich können auch Mischungen mehrerer der genannten, ggf. auch zusammen mit nicht genannten Verbindungen D) eingesetzt werden.

Bevorzugte Komponenten D) sind 1,2-Ethandiamin, 1-Amino-3,3,5-trimethyl-5-aminomethyl-cyclohexan, Diethylentriamin, Diethanolamin, Ethanolamin, N-(2-Hydroxyethyl)-ethylendiamin und N,N-Bis(2-Hydroxyethyl)-ethylendiamin.

Komponenten D) dienen als di- oder trifunktionelle Kettenverlängerungsmittel bevorzugt dazu, höhere Molekulargewichte aufzubauen oder als monofunktionelle Verbindungen, Molekulargewichte zu begrenzen und/oder ggf. zusätzlich weitere reaktive Gruppen, wie z.B. freie Hydroxylgruppen einzubauen. Wenn auf den Einsatz der (Poly)amine (D) verzichtet wird, entstehen als Polymere reine Polyurethane (die keine Harnstoffgruppen enthalten).

Komponente D) ist in dem erfindungsgemäßen Polyurethan in Mengen von bevorzugt 0 bis 10, besonders bevorzugt von 0 bis 5 und ganz besonders bevorzugt in Mengen von 0,2 bis 3 Gew.-% enthalten.

Ggf. mit zu verwendende Komponente E) können z.B. sein aliphatische, cycloaliphatische oder aromatische Monoalkohole mit 2 bis 22 C-Atomen wie Ethanol, Butanol, Hexanol, Cyclohexanol, Isobutanol, Benzylalkohol, Stearylalkohol, 2-Ethylethanol und für Isocyanatgruppen gebräuchliche, unter erhöhten Temperaturen wieder abspaltbare Blockierungsmittel wie z.B. Butanonoxim, Dimethylpyrazol, Caprolactam, Malonester, Triazol, Dimethyltriazol, tert.-Butylbenzylamin, Cyclopentanoncarboxyethylester.

Komponenten E) können in dem erfindungsgemäßen Polyurethan in Mengen bevorzugt von 0 bis 20, ganz bevorzugt von 0 bis 10 Gew.-% enthalten sein.

Die Mitverwendung von Komponente E) kann z.B. zu erfindungsgemäßen Polyurethan-Dispersionen führen, die zusätzlich zu den reaktiven Carboxylgruppen weitere reaktive Gruppen enthalten, was z.B. die Anwendung verschiedener Vernetzungsmechanismen (Dual Cure) ermöglicht, um spezielle Eigenschaften, wie z.B. ein zweistufige, ggf. zeitlich versetzte Aushärtung oder besonders hohe Vernetzungsdichte zu erzielen.

Die lateralen und / oder terminalen Carboxylgruppen können prinzipiell über jede der Aufbaukomponenten A) bis E) in das Polymergerüst eingebaut werden. Bevorzugt werden sie über die Komponenten C), D) und E) eingebaut.

Ein Einbau über die Komponente C) kann beispielsweise durch Verwendung von Dimethylolpropionsäure oder Dimethylolbuttersäure erfolgen, indem kein Neutralisationsmittel oder Neutralisationsmittel im stöchiometrischen Unterschuss zugegeben wird.

Zum Einbau von Carboxylgruppen als Komponenten D) geeignet sind beispielsweise Verbindungen, die jeweils nur eine isocyanatreaktive Aminogruppe enthalten und somit bei der Herstellung der erfindungsgemäßen Polyurethane durch Umsetzung mit der Isocyanatkomponente zu endständigen (terminalen) Carboxylgruppen führen. Geeignet sind lineare aliphatische, verzweigte aliphatische, aliphatisch-aromatische und aromatische Aminocarbonsäuren. Beispielhaft genannt seien Aminocarbonsäuren mit einer primären oder sekundären Aminogruppe, wie Alanin, 6-Aminohexansäure, Aminoundecansäure, 8-Aminooctansäure, 5-Aminopentansäure, 4-Aminobuttersäure, Aminobenzoesäure, 4-Aminomethylcyclohexancarbonsäure, 2-Aminohexansäure, 4-Aminocyclohexan-carbonsäure, 12-Aminododecansäure, 9-Aminononacarbonsäure.

Weiterhin zum Einbau von Carboxylgruppen als Komponenten D) geeignet sind beispielsweise Diaminocarbonsäuren, die jeweils über 2 isocyanatreaktive Aminogruppen verfügen und somit bei der Herstellung der erfindungsgemäßen Polyurethane durch Umsetzung mit der Isocyanatkomponente zu seitenständigen (lateralen) Carboxylgruppen führen. Beispiele sind Lysin, Arginin und Histidin.

Zum Einbau von Carboxylgruppen als Komponenten E) geeignet sind beispielsweise Hydroxycarbonsäuren, die jeweils nur eine Hydroxylgruppe enthalten, wie zum Beispiel Hydroxypivalinsäure, Hydroxyessigsäure und 2-Hydroxpropansäure.

Besonders bevorzugte Polymerdispersionen sind Dispersionen von teilkristallinen oder kristallinen Polymeren mit lateralen und / oder terminalen Carboxylgruppen in der Polymerkette.

Als teilkristallin oder kristallin wird ein Polymer bezeichnet, wenn es in der DSC-Messung nach DIN 65467 bei einer Aufheizrate von 20 K/min einen Schmelzpeak aufweist. Der Schmelzpeak wird durch das Aufschmelzen regelmäßiger Teilstrukturen im Polymer verursacht. Die Schmelztemperatur der aus den erfindungsgemäßen Formulierungen erhaltenen Polymere bzw. Polymerschichten liegt dabei bevorzugt in einem Bereich von 30 °C bis 110 °C, besonders bevorzugt von 35 °C bis 90 °C, ganz besonders bevorzugt von 42 °C bis 60 °C. Die Schmelzenthalpie der aus den erfindungsgemäßen Formulierungen erhaltenen Polymerschichten ist > 5 J/g, bevorzugt > 15 J/g. Ausgewertet wird die erste Aufheizung, um auch langsam kristallisierende Polymere zu erfassen.

Während die Lehre der vorliegenden Erfindung grundsätzlich mit jedem dispergierten Polyurethan- bzw. Polyurethan-Hamstoff-Polymer verwirklicht werden kann, enthält erfindungsgemäß das teilkristalline oder kristalline Polymer als Komponente A) bevorzugt ein oder mehrere kristalline oder teilkristalline difunktionelle Polyesterpolyole. Die Herstellung von kristallinen oder teilkristalline Polyesterpolyolen ist aus dem Stand der Technik bekannt.

Als kristalline oder teilkristalline Polyesterpolyole A) kommen insbesondere lineare oder auch schwach verzweigte Polyesterpolyole in Betracht, die auf Dicarbonsäuren und/oder deren Derivaten, wie Anhydride, Ester oder Säurechloride und bevorzugt aliphatischen, linearen Polyolen basieren. Auch Mischungen von Dicarbonsäuren und/oder deren Derivate sind geeignet. Geeignete Dicarbonsäuren sind beispielsweise Adipinsäure Als kristalline oder teilkristalline difunktionelle Polyesterpolyole, Bernsteinsäure, Sebacinsäure oder Dodecandisäure. Bevorzugt sind Bernsteinsäure, Adipinsäure und Sebacinsäure und deren Mischungen, besonders bevorzugt sind Bernsteinsäure und Adipinsäure und deren Mischungen, ganz besonders bevorzugt ist Adipinsäure. Diese werden in Mengen von mindestens 90 mol-%, bevorzugt von 95 bis 100 mol-%, bezogen auf die Gesamtmenge aller Carbonsäuren, eingesetzt.

Die difunktionellen Polyesterpolyole können beispielsweise durch Polykondensation von Dicarbonsäuren mit Polyolen hergestellt werden. Die Polyole haben bevorzugt ein Molgewicht von 62 bis 399 g/mol, bestehen aus 2 bis 12 C-Atomen, sind vorzugsweise unverzweigt, difunktionell und weisen bevorzugt primäre OH-Gruppen auf.

Beispiele für Polyole, die für die Herstellung der Polyesterpolyole verwendet werden können, sind mehrwertige Alkohole, wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische.

Bevorzugte Polyolkomponenten für die Polyesterpolyole sind Ethandiol-1,2, Butandiol-1,4 und Hexandiol-1,6, besonders bevorzugt sind Butandiol-1,4 und Hexandiol-1,6, ganz besonders bevorzugt ist Butandiol-1,4.

Zur Herstellung der erfindungsgemäßen wässrigen Polyurethan- bzw. Polyurethan-Harnstoff-Dispersionen können sämtliche, aus dem Stand der Technik bekannte Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organische Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt sind das Schmelz-Emulgier-, Prepolymer-Misch- und das Aceton-Verfahren. Besonders bevorzugt ist das Acetonverfahren. Die Anwendung und Durchführung des Acetonverfahrens ist Stand der Technik und dem Fachmann z.B. aus der EP-A 0 232 778 bekannt.

Das pulverförmige Polycarbodiimid kann mit Hilfe geeigneter Rühraggregate (Dissolver, Propellerrührer, Scheibenrührer, Speedmixer o.ä.) direkt in die Polymerdispersion eingerührt werden. Das direkte Einrühren erfolgt gegebenenfalls unter Mitverwendung von Zusätzen wie Schutzkolloiden, Emulgatoren, Verdickern, Füllstoffen, Entschäumern, Farbstoffen und anderen für die Herstellung von Dispersionsklebstoffen üblichen Hilfsstoffen.

Vorteilhaft ist ggf. die separate Herstellung der wässrigen Formulierung des Polycarbodiimidpulvers. Hierzu wird das pulverförmige Polycarbodiimid mit Hilfe geeigneter Rühraggregate (Dissolver, Propellerrührer, Scheibenrührer, Speedmixer o.ä) in eine wässrige Mischung aus Schutzkolloiden, Emulgatoren, Verdickern, Entschäumern ggf. weiteren Zusätzen dispergiert. Bei Bedarf kann dann die wässrige Formulierung mittels geeigneter Rühraggregate (Dissolver, Propellerrührer, Scheibenrührer, Speedmixer o.ä) in die Polymerdispersion eingerührt werden.

Die Menge Polycarbodiimidpulver in der Klebstoffdispersion bzw. der getrockneten Klebstoffschicht, dem Klebstofffilm bzw. dem Klebstoffpulver richtet sich nach der Konzentration der nukleophilen Gruppen (Carboxyl-, Amino-, Mercapto- bzw. OH-Gruppen) in dem Dispersionspolymer. Das mol-Verhältnis der nukleophilen Gruppen zu den Carbodiimidsegmenten (-N=C=N-) im Feststoffpolycarbodiimid beträgt 1: 10 bis 1:5 und bevorzugt 1:5 bis 1:1 und besonders bevorzugt 1:4 bis 1:2.

Die erfindungsgemäßen Zubereitungen werden für die Herstellung von Klebeverbindungen eingesetzt. Nach oder während des Trocknens der durch Auftragen der wässrigen Dispersion erzeugten Klebstoffschicht wird durch kurzzeitiges Erwärmen des Klebstoffpolymers (mittels Infrarot-Strahlung, in einem Heizkanal oder in einer erwärmten Presse) das Polymer auf eine Temperatur > Tm (oberhalb der Schmelztemperatur) erwärmt und dabei soweit verflüssigt, dass es gut auf die Oberflächen der zu verklebenden Substrate ausfließen, d.h. diese benetzen kann.

Die erfindungsgemäßen Zubereitungen können auch mit ferromagnetischen Partikeln ausgerüstet sein. Auf diese Weise kann die Erwärmung des Klebstoffpolymers auch durch Induktion erfolgen. Ebenso ist die Erwärmung mit Mikrowellen möglich.

Typischen Substrate sind z.B. Textilen, Polymerfilme z.B. aus PVC, metallische Substraten, auch in Form von Folien, thermoplastischen Kunststoffen zum Beispiel Polyamid (PA), Acrylbutadien-Styrol (ABS), Polycarbonat (PC) oder Blends aus ABS und PC, Polyester, polyolefinische Substrate ggf. nach geeigneter Vorbehandlung bzw. Auftrag eines Primers zur Erreichung der notwendigen Oberflächenenergie, Holz oder Holzfasern enthaltene Substarte wie z.B. Sperrholz, Mitteldichte Faserplatte (MDF), Dekorfolien wie sie z.B. im Automobilinnenraum zur Anwendung kommen (PVC-Schaumfolie, PU-Folien oder polyolefinische Folie mit und ohne Prägung).

Die erfindungsgemäßen wässrigen Zubereitungen können auf beliebige Weise, z.B. im Sprüh-, Rakel-, Pinsel-, oder Walzen-Auftragsverfahren auf flächige oder dreidimensionale Oberflächen appliziert werden. Nach dem Trocknen erhält man latent-reaktive (Vorbeschichtungen.

Werden (teil)kristalline Polyurethan-Dispersionen verwendet, dann können die Formulierungen auch auf Trennpapier (z. B. Silikonpapier oder polyolefinisch antihaftend ausgerüsteten Papier oder ähnlichen Trägermaterialien) im Sprüh-, Rakel-, Pinsel-, oder Walzenauftragsverfahren appliziert werden. Nach dem Trocknen erhält man selbsttragende latent-reaktive Filme oder Vliese, die ggf. nach Einlegen eines Trennpapiers, aufgewickelt und bis zum Einsatz als Klebstofffilm gelagert werden können.

Aus den erfindungsgemäßen Zubereitungen mit (teil)kristallinnen Polyurethan-Dispersionspolymeren können durch geeignete technische Verfahren die Feststoffe in Form von Granulat oder Pulver gewonnen werden.

Zum Beispiel können die erfindungsgemäßen Formulierungen durch Sprühtrocknung vom Wasser befreit werden. Man erhält so latent-reaktive Pulver, die ggf. durch einen sich anschließenden Mahlprozess auf kleine Partikelgrößen gemahlen werden können.

Latent-reaktive Pulver können auch durch Koagulation von Polymerdispersionen mit festen Carbodiimid-Partikeln erhalten werden. Dabei werden Mischungen aus z.B. anionisch stabilisierte Polymerdispersionen und festen Polycarbodiimid über einen Rotor/Stator-Mischer (z.B. von Fa. Kotthoff) oder über einen Strahldispergator in eine Salzlösung mit mehrwertigen Kationen (z.B. $Ca^{2+}$, $Mg^{2+}$, $Al^{3+}$) dispergiert. Beim Kontakt der anionischen Gruppen an der Oberfläche der Polymer-Partikel mit den mehrwertigen Kationen kommt es sofort zur Koagulation der Polymerpartikel, wobei die Polycarbodiimid-Partikel in das Koagulat eingeschlossen werden. Das Koagulat wird durch Filtration, Zentrifugieren etc. weitgehend vom Wasser befreit und anschließend bei Temperaturen unterhalb der Reaktionstemperatur des Polycarbodiimids bzw. der Schmelztemperatur des Dispersionspolymers getrocknet. Ggf. kann das Koagulat nach der Trocknungen in einem Mahlprozess - z.B. in Kugel-, Perl-, Sandmühlen oder Strahlmühlen - auf die geforderten Partikelgrößen gemahlen werden.

Eine weitere Möglichkeit zur Herstellung latent-reaktiver Pulver besteht im Ausfrieren der Mischung aus Polymer und Polycarbodiimid aus den wässrigen Zubereitungen bei Temperaturen unterhalb von 0°C. Das ausgefallene Polymer/Polycarbodiimid-Gemisch wird anschließend vom Wasser durch Filtration, Zentrifugieren etc. weitgehend befreit und abschließend getrocknet. Das erhaltene grobkörnige Pulver kann dann durch geeignete Mahlung - ggf. muss der Mahlprozess bei tiefen Temperaturen (i.e. deutlich unterhalb der Glastemperatur) stattfinden - z.B. in Kugel-, Perl-, Sandmühlen oder Strahlmühlen auf die geforderten Partikelgrößen gemahlen werden kann.

Die Trocknung der latent-reaktiven Beschichtungen, Filme, Vliese oder Pulver muss bei Temperaturen unterhalb der Erweichungstemperatur des Polymers bzw. der Erweichungstemperatur (Tg oder Tm) des Polycarbodiimids erfolgen. Dabei ist die niedrigste der Erweichungs- bzw. Schmelztemperaturen anzusetzen. Würde eine der genannten Temperaturen überschritten, dann würde das unweigerlich zur (vorzeitigen und daher unerwünschten) Vernetzung des Polymers führen. Die weitgehend trockenen latent-reaktiven Beschichtungen, Filme oder Pulver können noch eine Restfeuchte von 0,1 - 5% aufweisen.

Die erfindungsgemäßen latent-reaktiven Klebstoffdispersionen, latent-reaktiven Klebstoffschichten, selbsttragenden latent-reaktiven Klebstofffolien oder die latent-reaktiven Klebstoffpulver finden beim Kleben verschiedenster Substratkombinationen Verwendung:
Die erfindungsgemäße wässrige Formulierung kann z.B. im Sprüh, Rakel oder Walzenauftrag auf ein Substrat aufgetragen und getrocknet werden (ggf. bei erhöhter Temperatur). Man erhält so ein mit latent-reaktiven Klebstoffpolymer ausgerüstetes Substrat.

Die latent-reaktive Klebstofffolie kann unter Anwendung von Druck und bei einer Temperatur unterhalb der Reaktionstemperatur des reaktiven Klebstoffpolymers (z.B. einem Kalanders) auf eine Folienbahn laminiert werden. Man hält so das mit latent-reaktivem Klebstoffpolymer ausgerüstete Substrat.

Das Klebstoffpulver kann auf eine Substrat z.B. Folienbahn, Textil, Leder etc. aufgestreut und durch Erwämen des Klebstoffpulvers (z.B. mit Infrarot-Strahler, mit erwärmet Luft, oder einem Heizkanal) auf das Substrat aufgesintert werden. Man erhält so eine mit dem reaktive Klebstoffpulver ausgerüstetes Substrat.

Der Fügeprozess kann mit dem einseitig aufgetragenen Klebstoffpolymer (d.h. das Klebstoffpolymer befindet sich nur auf einer Oberfläche der zum Fügeprozess bereitgestellten Substrate) oder mit dem beidseitig aufgetragenen Klebstoffpolymer (d.h. das Klebstoffpolymer befindet sich auf beiden Oberflächen der zum Fügeprozess bereitgestellten Substrate) durchgeführt werden. Die für den jeweiligen Anwendungsfall optimale Vorgehensweise (einseitiger oder beidseitiger Auftrag) ist dabei u.a. abhängig von dem Benetzungsverhalten der Substratoberflächen bei der Wärmeaktivierung mit der thermoplastisch erweichten Klebstoffschicht und kann vom Fachmann auf diesem technischen Gebiet im Rahmen seiner Routinetätigkeit ohne weiteres ermittelt werden.

Für den Fügeprozess muss das latent-reaktive Klebstoffpolymer wenigstens soweit erwärmt und dabei verflüssigt werden, dass es a) die klebstofffreie Substratoberfläche gute benetzen kann (bzw. auf die Substratoberfläche gut auffließen kann), und/oder b) die Polymerketten des Klebstoffpolymers sowie fließfähigen werden, dass sie ineinander verfließen (beim beidseitigem Klebstoffauftrag). Gleichzeitig wird mit der Erwärmung des Klebstoffpolymers die Vernetzungsreaktion ausgelöst. Die Fügebedingungen (Druck, Temperatur und Dauer) müssen dabei so gewählt werden, dass sowohl die gute Benetzung der Substratoberflächen erreicht wird als auch die Vernetzungsreaktion ausreichend initiiert wird.

Die Erwärmung des Klebstoffpolymers kann unmittelbar vor dem Fügeprozess mittels IR-Stahlen, in einem Heizkanal, durch Mikrowellen, durch Anblasen mit heißer Luft oder in einem Induktionsfeld erfolgen. Der Fügeprozess erfolgt dann durch z.B. Tiefziehen des Substrats mit der erwärmten Klebstoffschicht auf das zweite Substrat.

Eine weitere Möglichkeit besteht im Presskaschieren. Dabei werden die zur Verklebung vorgesehenen Substrate in einem beheizte Presse eingelegt und unter Einwirkung von Druck und Temperatur verpresst. Alternativ kann die latent-reaktive Klebstofffolie beim Presskaschieren auch separat zwischen die zu verklebenden Substrate eingelegt werden.

**Methoden / Definitionen:**

Partikelgröße:

Die Bestimmung der Partikelgröße erfolgt nach der ISO 13320 (Laserbeugung). Es werden jeweils fünf Einzelmessungen durchgeführt und das arithmetische Mittel aus den Einzelmessungen angegeben. Messgerät: Malvern Mastersizer 3000.

Bestimmung der Carbodiimidkonzentration:

Die Bestimmung der Carbodiimid-Konzentration, i.e. der Konzentration der -N=C=N-Segmente im Polycarbodiimidharz, erfolgt ATR-infrarotspektroskopisch (Perkin Elmer Spectrum two).

Zunächst wurde Dicyclohexylcarbodiimid (DCC) in Ethanol gelöst (Konzentrationen: 0,1 mmol/g, 0,2 mmol/g, 0,5 mmol/g, 1,0 mmol/g, 1,5 mmol/g und 2 mmol/g). Von diesen Lösungen wurden die IR-Spektren aufgenommen. Die Peakflächen ($P_A$) der Carbodiimidbande bei ca. 2118 cm$^{-1}$ wurden ermittelt. Aus den Daten (Konzentration c der DCC-Lösungen und den ermittelten $P_A$) wurde eine Kalibriergerade erstellt:

$P_A$ = m · c [meq DCC/g], wobei m die Steigung der Kalibriergeraden darstellt.

Für die Bestimmung der Carbodiimidkonzentration der Polycarbodiimidpulver wurden die Pulver zu 25 Gew% in Xylol gelöst. Die Peakfläche ($P_A$) der Carbodiimidbande bei ca. 2118 cm-1 der Lösung wurde ermittelt. Die Konzentration [meq DCC/g] wird durch $P_A \times 4/m$ berechnet.

Für die Bestimmung der Carbodiimidkonzentration in der wässrigen Zubereitung (Suspension) wurde eine wässrige Zubereitung bei RT getrocknet. Der Anteil Polycarbodiimidharz in dem getrockneten Rückstand wurde aus den nicht-flüchtigen Anteilen berechnet (= a [%]). Anschließend wurden 10g des getrockneten Rückstands in 20g Xylol gelöst. Von der xylolischen Lösung wurde dann mittels ATR-Infrarotspektroskopie die Peakfläche bei ca. 2118 cm-1 ermittelt. Die Carbodiimidkonzentration des Polycarbodiimidharzes in der wässrigen Zubereitung [meq DCC/g] wurde durch $P_A \times 3 \times 100 /(a \times m)$ berechnet.

Die Änderung der Carbodiimid-Konzentration wird in % bezogen auf den Ausgangswert angegeben. Aufgrund der Messbedingungen wird eine Ungenauigkeit für die Angabe der Änderung der Carbodiimid-Konzentration von ± 5 Prozentpunkten angenommen.

Glasübergangstemperatur (Tg):

Der Glasübergang charakterisiert den Temperaturbereich, indem die Verbindung aus dem spröden Zustand in den visko-elastischen Zustand übergeht. Die Bestimmung der Glasübergangstemperatur erfolgt mit der DSC (differential scanning calorimetry). Die Glasübergangstemperatur (Tg) ist die Temperatur bei der halben Höhe der Differenz der spezifischen Wärmekapazität zwischen Beginn und Ende des Glasübergangs (grafische Auswertung, Tangentenschnitt). Die Heizrate während der Messung beträgt 20K/min.

Schmelzpunkt (Tm):

Der Bestimmung der Schmelztemperatur erfolgt mit der DSC (differential scanning calorimetry). Die Schmelztemperatur (Tm) ist die Temperatur bei der der Schmelzpeak im DSC-Diagramm seine maximale Höhe erreicht. Die Heizrate während der Messung beträgt 20K/min.

Erweichungstemperatur:

Die Erweichungstemperatur steht synonym für die Glasübergangstemperatur bzw. für den Schmelzpunkt der Verbindung.

Mindestfilmbildungstemperatur (MFT):

Die MFT ist die niedrigste Temperatur, bei der ein Klebstoff- oder Lackformulierung einen zusammenhängenden Film bilden kann. Die MFT wird bei wässrigen Dispersionen nach DIN ISO 2115 bestimmt.

(Teil)kristallines Polymer:

Ein Polymer, welches sowohl kristalline als auch amorphe Bereiche (Domänen) enthält, bezeichnet man als teilkristallin. Der Begriff spielt im Wesentlichen in der Polymerphysik eine Rolle. Eine Methode zur Bestimmung der Kristallinität eines Polymers ist die DSC. Mit der DSC kann die Schmelztemperatur (Temperatur beim Maximum des Schmelzpeaks) und die Schmelzwärme (Fläche des Schmelzpeaks) ermittelt werden.

Herstellen der Klebeverbindungen:

5cm $\times$ 2cm Canvas-Streifen werden an einem Ende mit 1cm $\times$ 2cm Klebstoffdispersion bestrichen (Pinselauftrag ca. 100g/m$^2$ naß). Nach 1 Std. ist die Klebstoffschicht trocken. Die klebstoff-beschichteten Flächen werden so übereinander gelegt, dass der gefügte Prüfkörper im Zugscherversuch geprüft werden kann. Anschließend werdend die Prüfkörper in eine beheizte Membranpresse eingelegt und über 1min. bzw. 5min. unter Wärmeeinwirkung bei 4 bar verpresst. Die Temperatur an der Membranpresse ist dabei so eingestellt, dass die Temperatur in der Klebefuge nach 1min. bzw. 5min. den Wert von 70°C, 80°C, 90°C, 100°C, 110°C und 120°C erreicht.

Zur Beurteilung der Lagestabilität der latent-reaktiven Schichten oder Filme wurden die mit Klebstoffdispersione beschichteten Canvarstreifen vor dem Verpressen über 1 Monat und 2 Monate im Normklima (23°C 50% rel. Feuchte) gelagert.

Bestimmung der Erweichungstemperatur der Klebeverbindung:

Eine Woche nach Herstellung der Prüfkörper erfolgt die Bestimmung der Erweichungstemperatur im Zugschertest. Die Proben werden in einem Heizschrank eingehängt, mit einem 4kg Gewicht belastet und innerhalb von 30min. auf 40°C temperiert. Danach wird der Heizschrank mit einer Heizrate von 0,5K/min linear aufgeheizt. Das Versagen (die Erweichungstemperatur) der Klebverbindung wird automatisch bei öffnen der Klebeverbindung registriert. Die Endtemperatur der Methode liegt bei 150°C.

Oszillationsmessungen (Temperatur-Sweep)

Die Polymerprobe wird in die Messeinheit (Platte-Platte Geometrie mit 7,9 mm Durchmesser und Plattenabstand 0,65 mm) des auf 25°C temperierten Oszillationsrheometers (Rheometrics ARES) eingelegt und einseitig mit einer sinusförmigen Schubspannung [$\tau$] mit einer Frequenz von 1 Hz und eine Deformation von 0,02 beaufschlagt. Die Temperatur der Messeinheit wird während der Messung mit einer Heizrate von 5K/min von 25°C auf 150°C aufgeheizt. Aus dem gemessenen Drehmoment, der Phasenverschiebung zwischen Spannung und Dehnung und der Messgeometrie werden die Werte für den Speichermodul [G'] (elastische Anteil) und der Verlustmodul [G"] (viskose Anteil) berechnet (1). Die beiden Moduln [G'] und [G"] ermöglichen die qualitative Bewertung des Fließverhaltens des Polymers und erlauben somit einen Rückschluss auf die Beständigkeit einer Klebeverbindung.

(1) M. Laun, D. Auhl, R. Brummer, D. J. Dijkstra, C. Gabriel, M. A. Mangnus, M. Ruellmann, W. Zoetelief, U. A. Handge, "Guidelines for checking performance and verifying accuracy of rotational rheometers: viscosity measurements in steady and oscillatory shear Pure Appl. Chem. 2014 86(12) 1945-1968

Prinzipiell gilt bei niedrigen Frequenzen bzw. hohen Temperaturen für Klebstoffpolymere folgender Zusammenhang zwischen G" und G':

| Klebstoffpolymer ist fließfähig (Benetzung) | Gelpunkt | Vernetztes Klebstoffpolymer (Beständigkeit) |
|---|---|---|
| G" > G' | G" = G' | G" < G' |

**Beispiele**

Die vorliegende Erfindung wird anhand der nachfolgenden Beispiele weiter erläutert.

**Ausgangsstoffe:**

- Cycloaliphatisches Polyisocyanat H12MDI: 4,4' Diisocyanatodicyclohexylmethan, CAS-Nr. 79103-62-1 (Desmodur® W, Covestro Deutschland AG, Leverkusen, DE)
- Carbodiimidisierungskatalysator; 3-Methyl-1-phenyl-2-phospholen-1-oxid; CAS-Nr. 707-61-9 (Sigma-Aldrich Chemie GmbH, München, DE)
- Stabaxol® P: Aromatisches Polycarbodiimid in Pulverform. Verwendung Stabaxol® P als Hydrolyseschutzmittel für thermoplastischen Polyurethane (TPU), Polyester (PET), Polyamide (PA) etc. Stabaxol® P besitzt einen Schmelzpunkt zwischen 60°C und 90°C. Der Carbodiimidgehalt beträgt mindestens 12,5%. (Fa. Lanxess AG, Köln, DE)
- Stabaxol® P100: Polycarbodiimid in Pulverform. Stabaxol® P findet als Hydrolyseschutzmittel u.a. für Polyester (PET), Polyamide (PA) etc. Verwendung. Stabaxol® P 100 besitzt einen Schmelzpunkt zwischen 100°C und 120°C. Der Carbodiimidgehalt beträgt mindestens 13%. (Fa. Lanxess AG, Köln, DE)
- BorchiGel® A LA: Verdickungsmittel für wässrige Beschichtungssysteme auf Polyacrylatbasis. (Borchers GmbH, Berghausener Str. 100, 40764 Langenfeld, DE)
- BorchiGel® L75N: Flüssiges Verdickungsmittel auf Polyurethanbasis (Borchers GmbH, Berghausener Str. 100, 40764 Langenfeld, DE)
- Lucramul® 1820-liquid: Nichtionisches Dispergiermittel Basis: Fettalkohol (C16 - C18) ethoxyliert (LEVACO Chemicals GmbH, Chempark Leverkusen, 51368 Leverkusen, DE)
- Disperbyk® 191: VOC- und lösemittelfreies Netz- und Dispergieradditiv für wässrige Lacksysteme und Klebstoffe. Geeignet für bindemittelfreie und bindemittelhaltige Pigmentkonzentrate. Besonders optimiert für Emulsionssysteme. (BYK-Chemie GmbH 46483 Wesel)
- BYK® 024: VOC-freier silikonhaltiger Entschäumer für wässrige Dispersionslacke, Druckfarben und Überdrucklacke sowie Dispersionskleber. (BYK-Chemie GmbH 46483 Wesel)
- PUD 1: Dispercoll®U 2824 XP: Polyurethandispersion auf Basis Polyesterdiol der Covestro Deutschland AG, 51365 Leverkusen; Feststoffgehalt ca. 40 Gew.-%. Das Polymer enthält ca. 18 mmol COOH-Gruppen/100g. Das Polymer besitzt eine Glasübergangstemperatur von ca. -40°C. Der Schmelzpunkt der kristallinen Segmente in der Polyurethanpolymerkette liegt bei + 47°C.
- PUD 2: Dispercoll® U XP 2643: Polyurethandispersion auf Basis Polypropylenglykol der Covestro Deutschland AG, 51365 Leverkusen; Feststoffgehalt ca. 40 Gew.-%. Das Polymer enthält ca. 18 mmol COOH-Gruppen/100g. Das Polymer besitzt eine Glasübergangstemperatur von ca. -50°C.

**Rezepturen:**

**Beispiel 1: Herstellung eines festen Polycarbodiimids**

In einen 1ltr. Planschliffbecher werden 524g Desmodur® W vorgelegt und innerhalb von 2Std. mit 129g Dibutylamin umgesetzt. Danach werden 3,25g 3-Methyl-1-phenyl-2-phospholenoxid zugegeben und die Carbodiimidisierungsreaktion durch Aufheizen der Reaktionsmischung auf 180°C gestartet. Die Reaktionsmischung wird 60 Std. bei dieser Temperatur gehalten. Anschließend wird das Polycarbodiimidharz auf ein Blech gegossen wobei es erstarrt.

Das Polycarbodiimidharz besitzt eine Glasübergangstemperatur von + 35°C

Das feste Polycabodiimid (Beispiel 1) wurde durch Vermahlung in einer Messermühle bzw. einer Strahlmühle (Fa. Hosowaka-Alpine Type 100 AFG) auf die geeignete Partikelgröße dv50 < 100μm gemahlen.

| Beispiel | dv10 | dv50 | dv90 | Carbodiimidgehalt [meq DCC/g] |
|---|---|---|---|---|
| 1a | 15.0 | 65.8 | 186 | 3,0 |
| 1b | 6,3 | 20.8 | 50.9 | 3,0 |

(fortgesetzt)

| Beispiel | dv10 | dv50 | dv90 | Carbodiimidgehalt [meq DCC/g] |
|---|---|---|---|---|
| 1c | 1.1 | 3.4 | 7.7 | 3,3 |

dv-Werte in μm

2a und 2b sind nicht erfinderische Vergleichsbeispiele. Diese Polycarbodiimid-Pulver werden kommen als Hydrolyseschutzmittel für Polyestersegmente enthaltende Polymer (Polyester, TPUs etc.) zur Anwendung.

| Beispiel | | dv10 | dv50 | dv90 | Carbodiimidgehalt * [meq DCC/g] |
|---|---|---|---|---|---|
| 2a | Staboxol P 100 | 21,3 | 86,9 | 219 | 3,2 |
| 2b | Stabaxol P | 15,5 | 105 | 357 | 3,3 |

dv-Werte in μm

* der Carbodiimidgehalt [meq DCC/g] wurde zur besseren Vergleichbarkeit aus den Angaben in den Datenblättern

$$meq\frac{DCC}{g} = \frac{CDI\,[\%]}{\frac{40g}{mol}}\frac{1000\,mmol/mol}{100}$$

berechnet

**Herstellung der wässrigen Formulierung mit Polycarbodiimidpulver:**

Beispiel 3a und 3b: 100g Polycarbodiimidpulver 1a bzw. 1b, 135g Wasser, 10g Lucramul® 1820-liquid und 2,6g BorchiGel® ALA werden in ein Becherglas gegeben und mit einer Dissolverscheibe bei 3000 rpm über 5 min. gemischt. Es entsteht eine strukturviskose Paste, die direkt in die Polymerdispersion eingerührt werden kann.

Beispiel 4: 100g Polycarbodiimid 1c, 142g Wasser, 20g Disperbyk® 191, 1,4g BYK® 024 und 4g BorchiGel® L 75N werden in ein Becherglas gegeben und mit einer Dissolverscheibe bei 3000rpm über 5 min. gemischt. Es entsteht eine viskose Paste, die direkt in die Polymerdispersion eingerührt werden kann.

Beispiel 5 und 6: 100g Polycarbodiimid Beispiel 2a bzw. 2b, 136g Wasser, 20g Disperbyk® 191, 1,4g BYK® 024 und 4g BorchiGel® L 75N werden in ein Becherglas gegeben und mit einer Dissolverscheibe bei 3000rpm über 5 min. gemischt. Es entsteht eine viskose Paste, die direkt in die Polymerdispersion eingerührt werden kann.

| Polycarbodiimidpulver | Wässrige Formulierung Polycarbodiimidpulver |
|---|---|
| 1a | Beispiel 3a |
| 1b | Beispiel 3b |
| 1c | Beispiel 4 |
| 2a | Beispiel 5 |
| 2b | Beispiel 6 |

**Reaktive Polymerdispersion:**

| | Polymerdispersion | | Wässrige Formulierung Polycarbodiimid | | | Mol-Verh.: meq DCC:-COOH |
|---|---|---|---|---|---|---|
| Beispiel | PUD 1 | PUD 2 | 3a | 3b | 4 | |

(fortgesetzt)

| | Polymerdispersion | | Wässrige Formulierung Polycarbodiimid | | | Mol-Verh.: meq DCC:-COOH |
|---|---|---|---|---|---|---|
| 7* | 100 | - | - | - | - | - |
| 8 | 100 | - | 7,4 | - | - | 1,4:1 |
| 9 | 100 | - | 15,1 | - | - | 2,5:1 |
| 10 | 100 | - | - | 14,8 | - | 2,5:1 |
| 11 | 100 | - | - | 29,6 | - | 5,0:1 |
| 12 | 100 | - | - | - | 10,8 | 2:1 |
| 13 | 100 | - | - | - | 21,6 | 4:1 |
| 14* | - | 100 | - | - | - | - |
| 16 | - | 100 | 7,4 | - | - | 1,4:1 |
| 17 | - | 100 | 15,1 | - | - | 2,5:1 |
| 18 | - | 100 | - | 14,8 | - | 2,5:1 |
| 19 | - | 100 | - | 29,6 | - | 5,0:1 |
| 20 | - | 100 | - | - | 10,8 | 2:1 |
| 21 | - | 100 | - | - | 21,6 | 4:1 |
| Alle Mengenangaben in g | | | | | | |

Vergleichsbeispiele mit Feststoff-Polycarbodiimid für die Verwendung als Hydrolyseschutzmittel

| | Polymerdispersion | Wässrige Formulierung Poly carbodiimid | | Mol-Verh.: meq DCC:-COOH |
|---|---|---|---|---|
| Beispiel | PUD 1 | 5 | 6 | |
| 22* | 100 | 22,9 | | 4 : 1 |
| 23* | 100 | | 22,9 | 4 : 1 |
| Alle Mengenangaben in g<br>Die mit * gekennzeichneten Beispiele sind Vergleichsbeispiele | | | | |

**Ergebnisse:**

Oszillationsmessungen:

Die Oszillationsmessungen werden an getrockneten Klebstofffilmen durchgeführt. Dazu wurden die Dispersionen Beispiel 7*, 10, 11, 14*, 18 und 19 in Teflonschalen so aufgegossen, dass die Klebstoffpolymere nach dem Trocknen eine Schichtdicke von ca. 1 mm aufwiesen. Nach einer Woche Lagerung bei 23°C und 50% relativer Feuchte wurden die Filmproben im Oszillationsheometer (ARES, TA-Instruments) untersucht.

**Erweichungstemperatur der Klebeverbindung:**

| | Wärmeaktivierung 1 min. bei Temperatur | | | | | |
|---|---|---|---|---|---|---|
| Beispiel | 70°C | 80°C | 90°C | 100°C | 110°C | 120°C |
| 7* | 33 | 33 | 33 | 33 | 33 | 33 |

(fortgesetzt)

| Beispiel | Wärmeaktivierung 1 min. bei Temperatur | | | | | |
|---|---|---|---|---|---|---|
| | 70°C | 80°C | 90°C | 100°C | 110°C | 120°C |
| 8 | 33 | 37 | 32 | 33 | 29 | 37 |
| 9 | 40 | 37 | 39 | 36 | 35 | 40 |
| 10 | 37 | 34 | 42 | 37 | 43 | 46 |
| 11 | 43 | 41 | 40 | 45 | 52 | 65 |
| 12 | 53 | 53 | 53 | 56 | 55 | 55 |
| 13 | 54 | 52 | 53 | 59 | 58 | 57 |
| 14* | 26 | 26 | 26 | 26 | 26 | 26 |
| 16 | 26 | 24 | 38 | 32 | 29 | 32 |
| 17 | 29 | 28 | 42 | 38 | 37 | 48 |
| 18 | 50 | 56 | 67 | 76 | 86 | 115 |
| 19 | 71 | 82 | 84 | 113 | 107 | 96 |
| 20 | 50 | 64 | 72 | 101 | 103 | 118 |
| 21 | 59 | 48 | 105 | 116 | 121 | 124 |
| Alle Zahlenwerte [°C] | | | | | | |

| Beispiel | Wärmeaktivierung 5 min. bei Temperatur | | | | | |
|---|---|---|---|---|---|---|
| | 70°C | 80°C | 90°C | 100°C | 110°C | 120°C |
| 7* | 33 | 33 | 33 | 33 | 33 | 33 |
| 8 | 39 | 37 | 36 | 39 | 45 | 48 |
| 9 | 40 | 40 | 42 | 45 | 45 | 51 |
| 10 | 42 | 45 | 51 | 56 | 104 | 105 |
| 11 | 44 | 49 | 60 | 69 | 138 | 138 |
| 12 | 53 | 55 | 55 | 59 | 64 | 63 |
| 13 | 55 | 66 | 89 | 102 | 127 | 119 |
| 14* | 26 | 26 | 26 | 26 | 26 | 26 |
| 16 | 39 | 45 | 57 | 57 | 71 | 95 |
| 17 | 43 | 42 | 58 | 69 | 85 | 105 |
| 18 | 58 | 67 | 103 | 141 | 140 | 138 |
| 19 | 111 | 99 | 97 | 128 | 119 | 117 |
| 20 | 70 | 86 | 86 | 96 | 92 | 106 |
| 21 | 128 | 139 | 130 | 137 | 135 | 142 |
| Alle Zahlenwerte [°C] | | | | | | |

Die Vernetzerwirkung von festem Polycarbodiimid (Beispiel 2a und 2b sowie 3) in den Klebstoffschichten - erzeugt aus den Polyurethandispersionen PUD 1 und PUD 2 - ist offensichtlich. Die Erweichungstemperaturen der Klebeverbindungen nehmen mit steigender Temperatur und mit zunehmender Dauer der Wärmeeinwirkung zu. Die Zunahme der Erweichungstemperatur ist direkt auf die Polymervernetzung - und damit auf die Abnahme der Fließfähigkeit des Klebstoffpolymers bei erhöhter Temperatur - zurückzuführen.

Lagerung der klebstoffbeschichteten Substrate über 1 Monat bei 23°C / 50% rel. Feuchte:

| Beispiel | Wärmeaktivierung 5 min. bei Temperatur | | | | | |
|---|---|---|---|---|---|---|
| | 70°C | 80°C | 90°C | 100°C | 110°C | 120°C |
| 12 | 53 | 53 | 58 | 61 | 71 | 81 |
| 13 | 54 | 57 | 66 | 80 | 102 | 128 |
| 20 | 58 | 65 | 75 | 81 | 86 | 87 |
| 21 | 134 | 136 | 140 | 142 | 143 | 141 |
| Alle Zahlenwerte [°C] | | | | | | |

Lagerung der klebstoffbeschichteten Substrate über 2 Monate bei 23°C / 50% rel. Feuchte:

| Beispiel | Wärmeaktivierung 5 min. bei Temperatur | | | | | |
|---|---|---|---|---|---|---|
| | 70°C | 80°C | 90°C | 100°C | 110°C | 120°C |
| 12 | 53 | 54 | 57 | 62 | 67 | 86 |
| 13 | 54 | 59 | 68 | 79 | 99 | 131 |
| 20 | 38 | 56 | 76 | 77 | 80 | 85 |
| 21 | 87 | 128 | 137 | 128 | 135 | 131 |
| Alle Zahlenwerte [°C] | | | | | | |

Die Stabilität der reaktiven Klebstoffschicht auf dem Substrat ist ebenfalls offensichtlich. Auch nach 2 Monaten Lagerung der beschichteten Substrate können Klebeverbindungen erzeugt werden, bei denen die Erweichungstemperaturen über den Erweichungstemperaturen der Klebstoffpolymere ohne Polycarbodiimid-Vernetzer (Vergleichsbeispiele 7* und 14*) liegen.

Stabilität der Polycarbodiimidpulver in wässriger Formulierung:

Die wässrigen Polycarbodiimid-Subspersion Beispiel 3 wurde bei 23°C gelagert. Die Carbodiimidkonzentration der frischen sowie der über 1 Monat bzw. über 2 Monate gelagerte Polycarbodiimid-Suspension wurde nach Auflösen des getrockneten Polycarbodiimidharzes in Xylol bestimmt.

| Alter der wässrigen Polycarbodiimid-Suspension | Beispiel 3 |
|---|---|
| frisch | 3,2 |
| 1 Woche | 3,3 |
| 1 Monat | 3,1 |
| 2 Monate | 3,0 |

Alle Angaben in meq DCC/g Polycarbodiimidpulver.

Die wässrigen Formulierungen des Feststoff-Polycarbodiimids (Beispiel 3) sind über wenigstens 2 Monate hinreichend stabil.

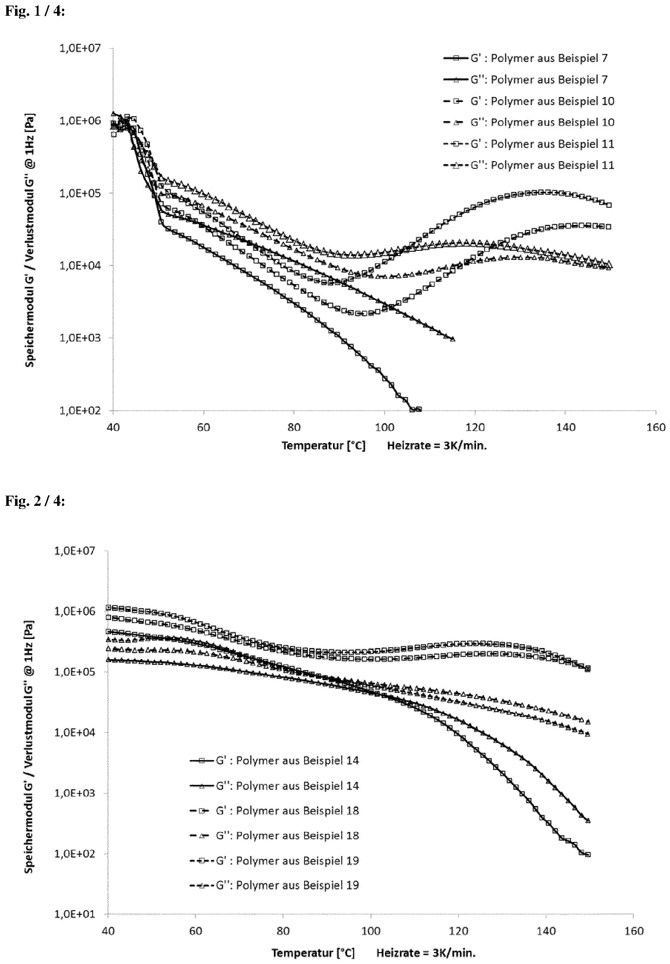

Fig. 1 zeigt, dass die Vernetzung der Polymerketten des Dispersionspolymers aus PUD 1 durch das feste Polycarbodiimid (Beispiel 3b) offensichtlich ist:

    i. Polymer aus Beispiel 7 (ohne Vernetzer) ist G' < G" über den gesamten Temperaturbereich
    ii. Polymer aus Beispiel 10: G' steigt ab 94°C an; G' = G" bei 120°C
    iii. Polymer aus Beispiel 11: G' steigt ab 86°C an; G' = G" bei 105°C

**Fig. 2** zeigt, dass die Vernetzung der Polymerketten des Dispersionspolymers aus PUD 2 durch das feste Polycarbodiimid (Beispiel 3b) offensichtlich ist.

    i. Polymer aus Beispiel 14 (ohne Vernetzer) = G' < G" bei 100°C.

    ii. Polymer aus Beispiel 18: G' > G" über dem gesamten Temperaturbereich. Mit zunehmender Temperatur nimmt der Abstand zwischen G' und G" zu.

    iii. Polymer aus Beispiel 19: G' > G" über dem gesamten Temperaturbereich. Mit zunehmender Temperatur nimmt der Abstand zwischen G' und G" zu.

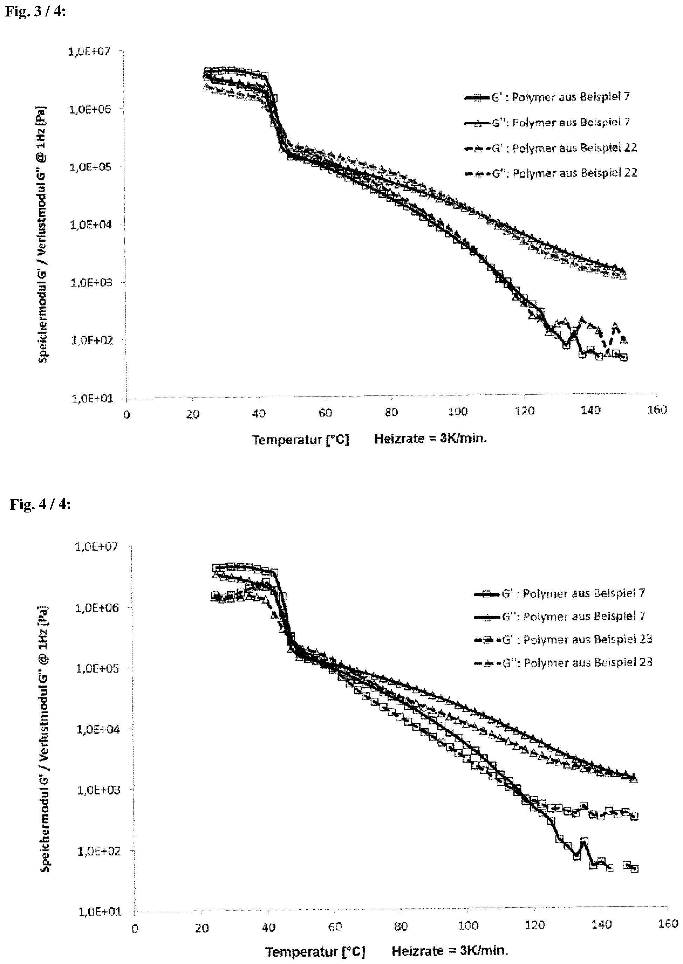

**Fig. 3** zeigt, dass das als Hydrolyseschutzmittel verwendete Staboxol® P 100 (Beispiel 2a) bis 160°C keine Vernetzerwirkung aufweist. Der Wert für G' liegt über den gesamten Temperaturbereich unter dem Wert von G".

**Fig. 4** zeigt, dass das als Hydrolyseschutzmittel verwendete Staboxol® P (Beispiel 2b) bis 160°C keine Vernetzerwirkung aufweist. Der Wert für G' liegt über den gesamten Temperaturbereich unter dem Wert von G".

## Patentansprüche

1. Latent-reaktive Zubereitungen auf Basis von Dispersionspolymeren, die eine Mindestfilmbildungstemperatur von $\leq$ +23 °C aufweisen und eine Glasübergangstemperatur gemessen mit der DSC (Heizrate 20K/min) von $\leq$ 0°C, die mit Carbodiimiden vernetzt werden können, und wenigstens ein Polycarbodiimid mit einer Glasübergangstemperatur von wenigstens +30°C und einer mittleren Funktionalität von mindestens 2 enthalten, wobei das Polycarbdiimid aliphatisch oder cycloaliphatisch gebundene Carbodiimid-Gruppen aufweist und eine Partikelgröße dv(50) $\leq$ 70 $\mu$m aufweist, wobei das Dispersionspolymer ein Polyurethan- oder Polyurethan-Polyharnstoff-Polymer ist, wobei das mol-Verhältnis der nukleophilen Gruppen zu den Carbodiimidsegmenten (-N=C=N-) im Feststoffpolycarbodiimid 1:5 bis 1:1 beträgt,

   wobei die nukleophilen Gruppen ausgewählt sind aus Carboxyl-, Amino-, Mercapto- und/oder OH-Gruppen, wobei die Mindestfilmbildungstemperatur nach DIN ISO 2115 bestimmt wird und die Partikelgröße nach ISO 13320 durch Laserbeugung mit einem Malvern Mastersizer 3000 als Messgerät bestimmt wird.

2. Zubereitungen gemäß Anspruch 1, **dadurch gekennzeichnet, dass** es sich um wässrige Dispersionen handelt.

3. Zubereitungen gemäß Anspruch 1, **dadurch gekennzeichnet, dass** es sich um pulverförmige Mischungen handelt.

4. Zubereitungen gemäß Anspruch 1, **dadurch gekennzeichnet, dass** es sich um einen Film handelt.

5. Zubereitungen gemäß Ansprüchen 1 bis 4, **dadurch gekennzeichnet, dass** das Polycarbodiimid eine Partikelgröße dv(50) $\leq$ 20 $\mu$m und besonders bevorzugt Partikel mit dv(50) $\leq$ 3,4 $\mu$m aufweist.

6. Zubereitungen gemäß Ansprüchen 1 bis 5, **dadurch gekennzeichnet, dass** das Dispersionspolymer ein teilkristallines Polyurethan- oder Polyurethan-Polyharnstoff Polymer ist.

7. Zubereitungen gemäß Ansprüchen 1 bis 6, **dadurch gekennzeichnet, dass** das Dispersionspolymer ein Polyurethan- oder Polyurethan-Polyharnstoff Polymer ist, welches Polycarbonat-Segmente in der Polyolkomponente (A) enthält.

8. Mit Zubereitungen gemäß Ansprüchen 1 bis 4 beschichtete Substrate.

9. Verwendung von Zubereitungen gemäß Ansprüchen 1 bis 7 als Klebstoffe.

10. Verwendung von Zubereitungen gemäß Ansprüchen 1 bis 2 als Klebstoffdispersionen.

11. Verwendung von Zubereitungen gemäß Ansprüchen 1 bis 7 zur Herstellung von lagerstabilen, latent reaktiven Klebstoffschichten.

12. Verwendung von Zubereitungen gemäß Ansprüchen 1 bis 7 zur Herstellung von lagerstabilen, selbsttragenden latent-reaktiven Klebstofffilmen.

**13.** Verwendung von Zubereitungen gemäß Ansprüchen 1 bis 7 zur Herstellung von lagerstabilen, latent-reaktiven Klebstoffpulvern.

**14.** Mit aus Zubereitungen gemäß Ansprüchen 1 bis 7 erhaltenen latent-reaktiven Filmen beschichtete Substrate.

**15.** Durch thermisch induzierte Aushärtung der latent-reaktiven Filme auf mit diesen beschichteten Substraten gemäß Anspruch 14 verklebte Substrate.

**Claims**

**1.** Latently reactive, dispersion-polymer-based preparation having a minimum film-forming temperature of $\leq$ +23°C and a glass transition temperature measured by DSC (heating rate 20 K/min) of $\leq$ 0°C that can be crosslinked with carbodiimides and that comprises at least one polycarbodiimide having a glass transition temperature of at least +30°C and an average functionality of at least 2, wherein the polycarbodiimide has aliphatically or cycloaliphatically attached carbodiimide groups and a particle size dv(50) $\leq$ 70 $\mu$m, wherein the dispersion polymer is a polyurethane polymer or polyurethane-polyurea polymer, wherein the molar ratio of nucleophilic groups to carbodiimide segments (-N=C=N-) in the solid polycarbodiimide is 1:5 to 1:1, wherein the nucleophilic groups are selected from carboxyl, amino, mercapto and/or OH groups, wherein the minimum film-forming temperature is determined according to DIN ISO 2115 and the particle size is determined according to ISO 13320 by laser diffraction using a Malvern Mastersizer 3000 analyser.

**2.** Preparation according to Claim 1, **characterized in that** it is an aqueous dispersion.

**3.** Preparation according to Claim 1, **characterized in that** it is a pulverulent mixture.

**4.** Preparation according to Claim 1, **characterized in that** it is a film.

**5.** Preparation according to Claims 1 to 4, **characterized in that** the polycarbodiimide has a particle size dv(50) $\leq$ 20 $\mu$m and more preferably has particles having dv(50) $\leq$ 3.4 $\mu$m.

**6.** Preparation according to Claims 1 to 5, **characterized in that** the dispersion polymer is a semicrystalline polyurethane polymer or polyurethane-polyurea polymer.

**7.** Preparation according to Claims 1 to 6, **characterized in that** the dispersion polymer is a polyurethane polymer or polyurethane-polyurea polymer that contains polycarbonate segments in the polyol component (A).

**8.** Substrate coated with the preparation according to Claims 1 to 4.

**9.** Use of the preparation according to Claims 1 to 7 as an adhesive.

**10.** Use of the preparation according to Claims 1 to 2 as an adhesive dispersion.

**11.** Use of the preparation according to Claims 1 to 7 for the production of storage-stable, latently reactive adhesive layers.

**12.** Use of the preparation according to Claims 1 to 7 for the production of storage-stable, self-supporting latently reactive adhesive films.

**13.** Use of the preparation according to Claims 1 to 7 for the production of storage-stable, latently reactive adhesive powders.

**14.** Substrate coated with a latently reactive film obtained from a preparation according to Claims 1 to 7.

**15.** Substrate bonded by thermally induced curing of the latently reactive film on a substrate coated therewith according to Claim 14.

**Revendications**

1. Préparations à réaction latente à base de polymères de dispersion, qui présentent une température filmogène minimale ≤ +23°C et une température de transition vitreuse, mesurée par DSC (calorimétrie différentielle à balayage - vitesse de chauffage 20K/min), ≤ 0°C, qui peuvent être réticulés à l'aide de carbodiimides, et d'au moins un polycarbodiimide présentant une température de transition vitreuse d'au moins +30°C et une fonctionnalité moyenne d'au moins 2, le polycarbodiimide présentant des groupes carbodiimide liés de manière aliphatique ou cycloaliphatique et une grosseur de particule dv(50) ≤ 70 μm, le polymère de dispersion étant un polymère de polyuréthane ou de polyuréthane-polyurée, le rapport molaire des groupes nucléophiles aux segments carbodiimide (-N=C=N-) dans le polycarbodiimide solide valant 1:5 à 1:1, les groupes nucléophiles étant choisis parmi les groupes carboxyle, amino, mercapto et/ou OH, la température filmogène minimale étant déterminée selon la norme DIN ISO 2115 et la grosseur de particule selon la norme ISO 13320 étant déterminée par diffraction laser à l'aide d'un Malvern Mastersizer 3000 en tant qu'appareil de mesure.

2. Préparations selon la revendication 1, **caractérisées en ce qu'**il s'agit de dispersions aqueuses.

3. Préparations selon la revendication 1, **caractérisées en ce qu'**il s'agit de mélanges sous forme de poudre.

4. Préparations selon la revendication 1, **caractérisées en ce qu'**il s'agit d'un film.

5. Préparations selon les revendications 1 à 4, **caractérisées en ce que** le polycarbodiimide présente une grosseur de particule dv(50) ≤ 20 um et de manière particulièrement préférée des particules présentant une dv(50) ≤ 3,4 μm.

6. Préparations selon les revendications 1 à 5, **caractérisées en ce que** le polymère de dispersion est un polymère de polyuréthane ou de polyuréthane-polyurée partiellement cristallin.

7. Préparations selon les revendications 1 à 6, **caractérisées en ce que** le polymère de dispersion est un polymère de polyuréthane ou de polyuréthane-polyurée, qui contient des segments polycarbonate dans le composant polyol (A).

8. Substrats revêtus par des préparations selon les revendications 1 à 4.

9. Utilisation de préparations selon les revendications 1 à 7 en tant qu'adhésif.

10. Utilisation de préparations selon les revendications 1 à 2 en tant que dispersions adhésives.

11. Utilisation de préparations selon les revendications 1 à 7 pour la réalisation de couches adhésives stables à l'entreposage, à réaction latente.

12. Utilisation de préparations selon les revendications 1 à 7 pour la réalisation de films adhésifs stables à l'entreposage, autoportants, à réaction latente.

13. Utilisation de préparations selon les revendications 1 à 7 pour la réalisation de poudres adhésives stables à l'entreposage, à réaction latente.

14. Substrats revêtus par des films à réaction latente obtenus à partir de préparations selon les revendications 1 à 7.

15. Substrats collés par durcissement induit thermiquement des films à réaction latente sur des substrats revêtus par ceux-ci selon la revendication 14.

**Fig. 1 / 4:**

**Fig. 2 / 4:**

**Fig. 3 / 4:**

**Fig. 4 / 4:**

# EP 3 959 251 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2552982 A
- WO 2011120928 A
- EP 0922720 A
- EP 1600485 A
- EP 2099840 A
- WO 2008071307 A
- EP 0881243 A
- US 8399574 B
- EP 0767188 A
- EP 0005230 A
- EP 076188 A
- US 9957394 B
- WO 2018048709 A
- US 2016115349 A1
- WO 2018136488 A1
- EP 1247825 A1
- EP 2186841 A1
- EP 0403921 A
- EP 1767559 A
- DE 19701835 A
- DE 1130594
- DE 3512918
- US 2840589 A
- US 2853473 A
- US 2853518 A
- US 2941966 A
- EP 0206059 A
- EP 0232778 A

### In der Beschreibung aufgeführte Nicht-Patentliteratur

- **JUDITH PIETSCHMANN.** *Industrielle Pulverbeschichtung,* ISBN 979-3-8348-0463-1
- *Justus Liebigs Annalen der Chemie,* 1949, vol. 562, 75-136
- Polyurethanes. **N. ADAM et al.** Ullmann's Encyclopedia of 10 Industrial Chemistry, Electronic Release. Wiley-VCH, 2005
- **HOUBEN-WEYL.** Methoden der organischen Chemie. Georg-Thieme-Verlag, 1983, vol. E4, 897, , 900, , 910
- *Chemical Reviews,* 1967, vol. 67 (2), 107-113
- *Angew. Chem.,* 1962, vol. 74, 801-806
- *Angew. Chem.,* 1981, vol. 93, 855-866
- **HOUBEN-WEYL ; H. BARTL ; J. FALBE.** Erweiterungs- und Folgebände. Thieme, 1987, vol. E20, 1671-1682
- **M. LAUN ; D. AUHL ; R. BRUMMER ; D. J. DIJKSTRA ; C. GABRIEL ; M. A. MANGNUS ; M. RUELLMANN ; W. ZOETELIEF ; U. A. HANDGE.** Guidelines for checking performance and verifying accuracy of rotational rheometers: viscosity measurements in steady and oscillatory shear. *Pure Appl. Chem.,* 2014, vol. 86 (12), 1945-1968
- *CHEMICAL ABSTRACTS,* 79103-62-1
- *CHEMICAL ABSTRACTS,* 707-61-9